# EUROPÄISCHE PATENTSCHRIFT

(11) **EP 1 924 799 B1**
(45) Veröffentlichungstag und Bekanntmachung des Hinweises auf die Patenterteilung: **27.01.2010**
(21) Anmeldenummer: 06774753.5
(22) Anmeldetag: 28.08.2006
(51) Int. Cl.: F16L 19/08, F16L 17/02

(54) **ANSCHLUSSSTÜCK FÜR EIN ENDE EINES RUNDEN, INSBESONDERE ROHRFÖRMIGEN GEGENSTANDES**
CONNECTOR PIECE FOR AN END OF A ROUND IN PARTICULAR TUBULAR OBJECT
PIECE DE RACCORDEMENT CONÇUE POUR UN OBJET CIRCULAIRE, EN PARTICULIER TUBULAIRE

(30) Priorität: 15.09.2005 AT 15242005
(43) Veröffentlichungstag der Anmeldung: 28.05.2008
(73) Patentinhaber: E. Hawle Armaturenwerke GmbH, 4840 Vöcklabruck (AT)
(72) Erfinder: FÜHRER, Gerhard, A-4870 Pfaffing (AT); SCHLAGNITWEIT, Rupert, A-4850 Puchkirchen am Trattberg (AT)
(74) Vertreter: Puchberger, Peter
(86) Internationale Anmeldenummer: PCT/AT2006/000354
(87) Internationale Veröffentlichungsnummer: WO 2007/033390

(56) Entgegenhaltungen:
- EP-A1- 0 118 656
- WO-A-98/37351
- DE-A1- 2 259 850
- DE-B3- 10 340 477
- DE-C1- 4 422 564
- DE-U1- 8 223 557
- DE-U1- 8 705 276
- FR-A1- 2 437 560
- US-A- 2 647 770
- US-A- 3 195 902
- US-A- 4 220 359
- US-A- 5 558 375

## Beschreibung

Die Erfindung bezieht sich auf ein Anschlussstück für eine klemmende Verbindung mit einem Ende eines runden, insbesondere rohrförmigen Gegenstandes, wie dies im Oberbegriff des Anspruchs 1 beschrieben ist.

Die DE 87 05 276 U1 beschreibt ein Anschlussstück für eine klemmende Verbindung mit einem Ende eines runden Gegenstandes. Dieses Anschlussstück weist ein Gehäuse auf, in welchem eine Durchgangsbohrung mit einem darin ausgebildeten Gewinde angeordnet ist. Weiters umfasst das Anschlussstück einen Schraubteil, welcher ebenfalls eine Durchgangsbohrung aufweist und mit einem Außengewinde versehen ist, welches in das im Gehäuse ausgebildete Innengewinde eingeschraubt werden kann. Zusätzlich umfasst das Anschlussstück auch noch einen Ring, der mit einem Längsschlitz versehen ist sowie radial nach innen verformbar ausgebildet ist und ebenfalls eine Durchgangsbohrung aufweist. Vor der Montage des Anschlussstückes ist der Ring im Schraubteil durch eines seiner Enden gehalten, welches in das dem Stirnbund gegenüberliegend angeordnete Ende der Durchgangsbohrung des Schraubteils eingreift. Dazu weist der Schraubteil im Bereich der Durchgangsbohrung ausgehend von der dem Stirnbund gegenüberliegenden ringförmigen Stirnfläche aufeinander folgend eine erste kegelstumpfförmig ausgebildete Bohrung, eine erste zylindrisch ausgebildete Bohrung mit einem Durchmesser D1 sowie eine zweite zylindrisch ausgebildete Bohrung mit einem Durchmesser D2 auf, wobei der Durchmesser D2 größer ist, als der Durchmesser D1. Die beiden zylindrisch ausgebildeten Bohrungen sind durch eine radiale Schulter miteinander verbunden. Daran anschließend ist eine zweite kegelstumpfförmig ausgebildete Bohrung sowie eine dritte zylindrisch ausgebildete Bohrung mit einem Durchmesser D3 ausgebildet, wobei der Durchmesser D3 kleiner ist als der Durchmesser D1. An der Außenfläche des Rings sind ausgehend von der dem Schraubteil abgewendeten Stirnfläche bis hin zu der dem Schraubteil zugewendeten Stirnfläche hintereinander ein erster zylindrischer Abschnitt mit einem Durchmesser D5, eine erste kegelstumpfförmig verjüngende Fläche, ein zweiter zylinderförmiger Abschnitt mit einem Durchmesser D6, wobei dieser kleiner ausgebildet ist, als der Durchmesser D5, eine zweite kegelstumpfförmig sich erweiternde Fläche und ein dritter zylinderförmiger Abschnitt mit einem Durchmesser D7 vorgesehen. Dabei ist der Durchmesser D7 kleiner ausgebildet als der Durchmesser D5 und größer als der Durchmesser D6. Anschließend an den dritten zylinderförmigen Abschnitt ist eine dritte kegelstumpfförmig verjüngende Fläche vorgesehen, welche die gleiche Konizität wie die erste kegelstumpfförmig verjüngende Fläche aufweist. Im vormontierten Zustand wirken die beiden zylinderförmigen Bohrungen des Schraubteils mit dem Durchmesser D1 und D2 mit dem zweiten und dritten zylinderförmigen Abschnitt des Rings mit den Durchmessern D6 und D7 zusammen. Der Ring ist bezüglich des Schraubteils in Richtung der Längsachse gesehen, im vormontierten Zustand innerhalb gewisser Grenzen längsverschicblich in der Hinterschneidung gehalten. Einen Anschlag bilden dabei die radiale Schulter des Schraubteils sowie die zweite sich kegelstumpfförmig erweiternde Fläche aus.

Weitere Anschlussstücke sind aus der DE 22 59 850 A1, der DE 82 23 557 U1, der EP 0 118 656 A1, der FR 2 437 560 A1, der US 4,220,359 A, sowie der US 5,558,375 A bekannt geworden.

Unterschiedliche Dichtelemente für Anschlussstücke sind aus der WO 98/37351 A1, der US 2,647,770 A sowie der US 3,195,902 A bekannt geworden. Dabei weisen die Dichtelemente einen Grundkörper und zumindest einen über dem Umfang umlaufend ausgebildeten und zur Anlage am abzudichtenden Gegenstand vorgesehenen Dichtbereich auf, wobei der Dichtbereich in einer senkrecht zur Längsachse ausgerichteten Ebene über den Umfang gesehen einen unterschiedlichen Abstand zu dieser Ebene aufweist. Weiters kann das Dichtelement selbst über den Umfang gesehen, einen gewellten Verlauf aufweisen.

Aus der DE 82 23 557 U1 ist eine Klemmverbindung für glatte Rundkörper, insbesondere Rohre oder Stangen, mit einem Gewinde-Rohrkörper und einem Schraubkörper bekannt geworden, bei dem zwischen dem glatten Rundkörper, einer kegelstumpfförmigen Innenfläche des Schraubkörpers und einem Anschlag am Rohrkörper ein Greifring angeordnet ist, der auf seinem radial nach innen gerichteten Flächenabschnitt Kanten zum Festklemmen in die Außenfläche des glatten Rundkörpers aufweist. Der Greifring ist mittels Federkraft radial nach außen vorgespannt, wobei zur Herstellung der Verbindung lediglich der Schraubkörper angezogen werden muss. Zur Abdichtung des Gewinde-Rohrkörpers und dem glatten Rundkörper ist zur Aufnahme einer Dichtung eine ringförmig ausgebildete, vom Verschraubungsraum getrennte Ausnehmung in der Innenfläche des Gewinde-Rohrkörpers angeordnet. Die Dichtung ist weiters durch Einschieben des Rohres zusammenpressbar ausgebildet. Nachteilig dabei ist der Montageaufwand für den Zusammenbau der einzelnen Teile zur Bildung der gesamten und für die Verwendung vorbereiteten Klemmverbindung.

Aus der weiteren DE 83 06 170 U1 ist eine weitere Kupplungsvorrichtung für das druckdichte und lösbar Verbinden von Rohren aus nachgiebigen Werkstoff, insbesondere von Kunststoffrohren, bekannt geworden. Dabei ist der Grundkörper zur Aufnahme für das Rohr vorgesehen, wobei das Rohrende benachbart der äußeren Stirnfläche mit Abstand von einem Anlagering umschlossen ist, an dem sich ein Dichtring abstützt. Diesem Dichtring ist an der der Anlagefläche abgewandten Seite eine Gleitscheibe sowie ein geschlitzter Spannring zugeordnet, wobei der Spannring außen mit einer Keilfläche versehen ist, die sich an einer konischen Innenfläche eines ringförmigen, in den Innenraum des Grundkörpers einschraubbaren Schraubteils abstützt. Zur besser Abdichtung liegt auch der Dichtungsring außen an der konischen Innenfläche des Schraubteils an, dessen Innenkonus sich vom Einschraubende bis zu dem der äußeren Stirnfläche des Rohrendes zugewandten Endes hin erweitert. Weiters weist das Schraubteil an dem in den Grundkörper eingeführten Ende eine äußere zylindrische Führungsfläche auf. Im Bereich der zylindrischen Außenfläche ist zusätzlich zur Abdichtung eine weitere Dichtung vorgesehen.

Weitere zugfeste Rohrverbindung sind aus der DE 44 22 564 C1 sowie der DE 103 40 477 B3 bekannt geworden. Diese zugfesten Rohrverbindungen dienen zum Anschluss einer aus weichem Kunststoffbestehenden Rohrleitung an einer metallischen Muffe unter Vermittlung eines am Innendurchmesser mit reibschlusserhöhenden Mitteln versehen, als an einer Umfangsstelle geschlitzter Spreizklemmring ausgebildeten Sicherungsring. Dieser liegt in einer Innenumfangsnut ein und greift mit seiner Innenumfangsfläche mindestens mittelbar am Mantel des Rohres an. Weiters verjüngen sich die konischen Umfangs-Kontaktflächen zwischen Sicherungsring und Muffennut zur Mündung der Muffe hin. Der Sicherungsring ist hinsichtlich seiner Abmessungen (Außen- und Innendurchmesser, Schlitzweite) so auf die Muffe und das anzuschließende Rohr abgestimmt, dass seine Haltekraft von seiner elastischen Vorspannung gegen das Rohr und von den axialen Zugkräften an der Rohrverbindung bestimmt ist. Weiters weist der Sicherungsring gemäß der DE 44 22 564 C1 Angriffsflächen für ein Spreizwerkzeug auf, die von der Mündungsseite der Muffe bei darin eingelegten Sicherungsring zugänglich sind. An seinem nach außen weisenden Rand weist der Sicherungsring Angriffsflächen für einen Montagehilfskörper auf, der dem Sicherungsring derart in der Muffe hält, dass das anzuschließende Rohr berührungsfrei durch den aufgeweiteten Sicherungsring einschiebbar ist. Bei der DE 103 40 477 B3 wird auf die Angriffsflächen für das Spreizwerkzeug sowie die Angriffsflächen für den Montagehilfskörper sowie denselben verzichtet, wobei hier die reibschlusserhöhenden Mittel am Sicherungsring als im wesentlichen ringförmig umlaufende Rippen ausgebildet sind. Dabei ist wenigstens eine dieser Rippen mit in Umfangsrichtung kurzen rippenartigen Nasen versehen, die gegenüber der Rippe radial in Richtung auf die Längsachse erhöht sind.

Der vorliegenden Erfindung liegt die Aufgabe zugrunde, ein Anschlussstück der eingangs genannten Art zu schaffen, dessen Zusammenbau sowie der Montagevorgang am Gegenstand einfach und sicher durchzuführen ist.

Diese Aufgabe der Erfindung wird dadurch gelöst, dass das Spannelement in einer Einschubrichtung des Gegenstandes gesehen anschließend an den ersten inneren, sich kegelstumpfförmig erweiternden Oberflächenabschnitt einen zweiten annähernd zylindrischen Oberflächenabschnitt umfasst und zwischen diesen beiden Oberflächenabschnitten mindestens ein Positionierelement ausgebildet ist, und dass das Halteelement auf der dem Spannelement zugewendeten Seite im Bereich der äußeren Oberfläche einen gegengleich zu dem ersten kegelstumpf förmig erweiternden Oberflächenabschnitt und dem zweiten annähernd zylindrischen Oberflächenabschnitt des Spannelements ausgerichteten ersten annähernd zylindrischen und zweiten kegelstumpfförmigen Oberflächenbereich umfasst und in der Ausgangsstellung der annähernd zylindrische Oberflächenbereich des Halteelements zumindest bereichsweise am annähernd zylindrischen Oberflächenabschnitt des Spannelements anliegt und das Halteelement mit dem Positionierelement des Spannelements zusammenwirkt. Der sich durch die Merkmale des Anspruches 1 ergebende überraschende Vorteil liegt darin, dass durch das Zusammenwirken des zylindrischen Oberflächenabschnitts des Spannelements mit dem zylindrischen Oberflächenbereich des Halteelements eine Vorpositionierung bzw. Halterung des Halteelements am Spannelement erzielbar ist und so das Einsetzen dieser vorgefügten Bauteile gemeinsam und einfach in das Grundgehäuse, ohne zusätzlichen Richt- bzw. Positionieraufwand sowie zusätzliche Hilfsmittel bzw. Spezialwerkzeuge, erfolgen kann. Darüber hinaus sind auch keine Spezialwerkzeuge notwendig um die gegenseitige Vorpositionierung des Halteelements gegenüber dem Spannelement zu erzielen. Dadurch wird für den Anwender eine Einheit geschaffen, welche einfach auf den Gegenstand aufgeschoben bzw. dieser in das Anschlussstück eingebracht werden kann. Durch das gegenseitige Zusammenwirken des Halteelements mit dem Spannelement wird sowohl die Vormontage erleichtert als auch im Falle der Anwendung ein einfaches Verbinden mit dem Gegenstand ermöglicht. Durch die zylindrisch ausgebildeten Oberflächen ist eine einfache, gegenseitige relative Verlagerung zwischen dem Spannelement und dem Halteelement bis hin zum Erreichen bzw. dem Anschlag des Halteelements am Positionierelement des Spannelements möglich. In dieser Position werden die beiden so vormontierten Bauteile in das Grundgehäuse eingesetzt, wie dies durch eine Gewindeanordnung möglich ist.

Vorteilhaft sind auch weitere Ausführungsformen nach den Ansprüchen 2 bis 4, da dadurch unterschiedliche Aufnahmeräume mit zusätzlichen, aufeinander abgestimmten Anschlägen im Zusammenwirken der in das Grundgehäuse einzusetzenden Bauteile möglich ist. Dadurch können relative Verstellwege zwischen den Bauteilen einfach festgelegt werden, um so eine einwandfreie Funktion des Anschlussstücks zu ermöglichen.

Vorteilhaft ist weiters eine Ausbildung nach Anspruch 5, da dadurch eine sichere Abdichtung im Bereich der äußeren Oberfläche des Gegenstandes geschaffen werden kann.

Durch die Ausbildung nach Anspruch 6 ist es möglich, den im Inneren der Rohrleitung bzw. des Grundgehäuses herrschenden Druck von den weiteren, in das Grundgehäuse einzusetzenden Bauteilen fern zu halten.

Nach anderen Ausführungsvarianten gemäß den Ansprüchen 7 bis 10 wird bei Verwendung eines O-Rings als Dichtelement die Möglichkeit geschaffen, die für die Einschubbewegung notwendige Kraft zu reduzieren, da über den Umfang gesehen am Beginn der Einschubbewegung nur ein bereichsweiser Übergriff des Dichtelements über den Gegenstand erfolgt und erst bei weiterem Einschieben die vollständige Umschließung des Gegenstandes an dessen äußerer Oberfläche erfolgt. Durch die zusätzliche Anordnung der nutförmigen Vertiefung im Bereich der inneren Oberfläche kann eine noch bessere Lagefixierung des Dichtelements, insbesondere des O-Rings erzielt werden.

Vorteilhaft ist weiters eine Ausbildung des Dichtelements nach Anspruch 11, da durch die unterschiedlichen Abstände des Dichtbereichs im Bezug auf die zur Längsachse senkrecht ausgerichteten Ebene am Beginn der Einsetzbewegung des Gegenstandes in das Anschlussstück nicht der volle Umfang des Dichtelements an der äußeren Oberfläche zur Anlage kommt, wodurch geringere Einschubkräfte für die Einsetzbewegung notwendig werden. Durch diese, in Axialrichtung zueinander versetzten Abstände der in Eingriff mit dem aufzunehmenden Gegenstand kommenden Dichtbereiche erfolgt eine kontinuierliche Verformung des Dichtelements, wobei hingegen bei einer in der Ebene angeordneten Dichtfläche bzw. einem Dichtbereich eine wesentlich höhere Einsetzkraft für den Gegenstand notwendig ist.

Durch die Ausbildung nach Anspruch 12 ist es möglich, eine symmetrische Aufteilung der in Axialrichtung gegenüber der senkrecht zur Längsachse ausgerichteten Ebene versetzten Dichtbereiche zu erzielen.

Vorteilhaft ist auch eine Weiterbildung nach Anspruch 13 oder 14, da dadurch einfach auf unterschiedliche Einsatzbedingungen bezüglich auf das Dichtverhalten sowie die Dichtfläche Bedacht genommen werden kann.

Die Ausgestaltung nach Anspruch 15 ermöglicht eine exakte Festlegung des Dichtbereiches über den Umfang des Gegenstandes gesehen.

Schließlich ist aber auch eine Ausbildung, wie im Anspruch 16 beschrieben, von Vorteil, da dadurch im Bereich der äußeren Oberfläche des Dichtelements eine Art Labyrinthdichtung geschaffen werden kann, wodurch in diesem Bereich eine höhere Dichtwirkung zwischen dem Dichtelement und dem Grundgehäuse erzielbar ist.

Vorteilhaft ist auch Weiterbildungen nach den Ansprüchen 17 oder 18, da dadurch eine Aufnahme des einzubringenden Gegenstandes im Grundgehäuse möglich wird und trotzdem der Gegenstand zum Erreichen einer vordefinierten Position in das Grundgehäuse eingeschoben werden kann. Dadurch ist sichergestellt, dass das im Grundgehäuse angeordnete Dichtelement vollständig die äußere Oberfläche des Gegenstandes umschließt.

Bei den Ausgestaltungen nach den Ansprüchen 19 bis 22 ist von Vorteil, dass dadurch im Bereich der inneren Oberfläche des Spannelements verschiedene Abschnitte zum Zusammenwirken mit dem Halteelement geschaffen werden, um ausgehend von der Ausgangsstellung eine Verformung des Halteelements mit dem damit verbundenen Eingriff an dem zu haltenden Gegenstand zu ermöglichen. Dadurch werden Steuerkurven zwischen den Bauteilen geschaffen, die im Zusammenwirken eine einwandfreie Funktion des Anschlussstücks gewährleisten.

Durch die Weiterbildung nach Anspruch 23 wird erreicht, dass eine feinfühlige Einstellung und damit die verbundene Klemmung des im Anschlussstück eingebrachten Gegenstandes im Zusammenwirken mit dem Halteelement erfolgt.

Durch die Ausbildung nach Anspruch 24 oder 25 kann über die zu überwindende Distanz zwischen dem Ansatz und dem Endbereich des Halteelements die Einsetzbewegung des Spannelements in das Grundgehäuse festgelegt werden, wodurch die zusammenwirkenden Flächen zwischen dem Spannelement und dem Halteelement nach dem vollständigen Einsetzen des Spannelements in das Grundgehäuse eine eindeutige Kupplungsstellung bewirken.

Vorteilhaft ist auch eine Ausbildung nach Anspruch 26, da dadurch eine Platz sparende Ausbildung des Anschlussstücks bei ausreichend hohen Gegenkräften erzielbar ist.

Gemäß einer Ausbildung, wie im Anspruch 27 oder 28 beschrieben, werden die zum Zusammenwirken vorgesehenen Oberflächenbereiche in ihrer flächenmäßigen Ausdehnung reduziert, wodurch der Kupplungsvorgang mit der damit verbundenen Einsetzbewegung des Spannelements in das Grundgehäuse wesentlich erleichtert wird.

Dabei erweist sich eine Ausgestaltung nach Anspruch 29 oder 30 als vorteilhaft, weil dadurch zwischen dem Spannelement und dem Halteelement eine weitere in Axialrichtung mögliche Verstellung in einem gewissen Ausmaß ermöglicht wird, welche zwischen der ersten und der zweiten Kupplungsstellung zum Tragen kommt.

Nach vorteilhaften Weiterbildungen gemäß der Ansprüche 31 bis 33 wird zusätzlich zum Zusammenwirken des Halteelements mit dem Positionierelement am Spannelement eine Anschlagbegrenzung für die Einsetzbewegung der vormontierten Bauteile, nämlich des Spannelements und eines Halteelements, in das Grundgehäuse geschaffen. Gleichzeitig damit kann aber auch eine bessere Druckverteilung hin in Richtung auf die Längsachse im Zusammenwirken mit dem Spannelement erzielt werden.

Von Vorteil ist aber auch eine Ausbildung nach Anspruch 34 oder 35, weil dadurch auch in diesem Teilbereich des Halteelements eine Reduzierung der zusammenwirkenden Oberflächen geschaffen wird, wodurch bis zum Erreichen der ersten Kupplungsstellung ein gegenseitiger Eingriff zwischen dem Vorsprung und dem Spannelement großteils vermieden wird. Gemäß Anspruch 36 wird im Zuge der Vormontage des Halteelements und Spannelements eine sicherere Halterung zwischen diesen beiden Bauteilen erzielt, um so für die Einsetzbewegung dieser beiden vormontierten Bauteile in das Grundgehäuse ein störungsfreier Arbeitsablauf erzielt.

Bei den Ausbildungen gemäß den Ansprüchen 37 bis 41 wird eine bessere Lagefixierung des Dichtelements innerhalb des Grundgehäuses erzielt. Weiters kann dadurch bei Druckbeaufschlagung ein Hinaustreten des Dichtelements hin in Richtung des im Querschnitt erweiterten, in Einschubrichtung vorgelagerten Abschnitts verhindert werden. Dadurch ist auf alle Fälle sichergestellt, dass zwischen dem Gegenstand und dem Grundgehäuse stets eine gute Dichtwirkung erzielbar ist. Weiters wird aber dadurch auch noch während dem Zusammenbau des Anschlussstücks eine bessere Zentrierung des Halteelements auf der von Spannelement abgewendeten Seite erzielt. Dadurch wird ein Verkanten bzw. Kippen des Halteelements aus der Längsachse vermieden.

Möglich sind dabei auch Ausbildungen nach den Ansprüchen 42 bis 45, weil dadurch eine noch bessere Halterung zwischen der äußeren Oberfläche des Gegenstandes und des Halteelements erzielbar ist. Durch die bereichsweise sowie versetzte Anordnung der Rastelemente können auch Abweichungen in den Querschnittsäbmessungen, Beschädigungen oder dgl. am Gegenstand besser ausgeglichen werden.

Die Ausgestaltung nach Anspruch 46 ermöglicht, dass bereits in der ersten Kupplungsstellung eine radiale Kraftübertragung und damit verbunden eine bessere Halterung des Gegenstands im Halteelement ermöglicht wird.

Vorteilhaft sind auch Ausbildungen nach den Ansprüchen 47 bis 49, da dadurch ein vordefinierter, zusätzlicher Verstellweg zwischen dem Halteelement und dem Spannelement geschaffen wird, wobei dabei noch eine zusätzliche Querschnittsveränderung des Halteelements relativ gegenüber dem Gegenstand zur noch besseren Lagefixierung erfolgt.

Schließlich ist aber auch eine Ausbildung wie im Anspruch 50 beschrieben möglich, da dadurch eine weitere relative Verstellung des Halteelements gegenüber dem Spannelement in Axialrichtung verhindert wird. Dadurch wird auch eine zu starke querschnittsmäßige Deformation des Gegenstandes verhindert.

Die Erfindung wird im nachfolgenden anhand der in den Zeichnungen dargestellten Ausführungsbeispiele näher erläutert.

Es zeigen:
- Fig. 1: ein Anschlussstück in der Ausgangsstellung, im Axialschnitt und vereinfachter Darstellung;
- Fig. 2: das Anschlussstück nach Fig. 1 in der ersten Kupplungsstellung;
- Fig. 3: das Anschlussstück nach den Fig. 1 und 2, in der zweiten Kupplungsstellung;
- Fig. 4: einen Teilbereich des Spannelements nach den Fig. 1 bis 3, im Axialschnitt und vergrößerter Darstellung;
- Fig. 5: einen Teilbereich des Halteelements nach den Fig. 1 bis 3, im Axialschnitt und vergrößerter Darstellung;
- Fig. 6: eine weitere Ausbildung des Anschlussstücks, im Axialschnitt und vereinfachter Darstellung;
- Fig. 7: eine andere Ausbildung des Anschlussstücks, im Axialschnitt und vereinfachter Darstellung;
- Fig. 8: ein Dichtelement für ein Anschlussstück, im Axialschnitt und vereinfachter Dar- stellung;
- Fig. 9: eine weitere Ausbildung eines Halteelements, in vereinfachter schaubildlicher Darstellung;
- Fig. 10: das Halteelement nach Fig. 9 im Axialschnitt;
- Fig. 11: eine weitere Ausbildung eines Spannelements, im Axialschnitt und vereinfachter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

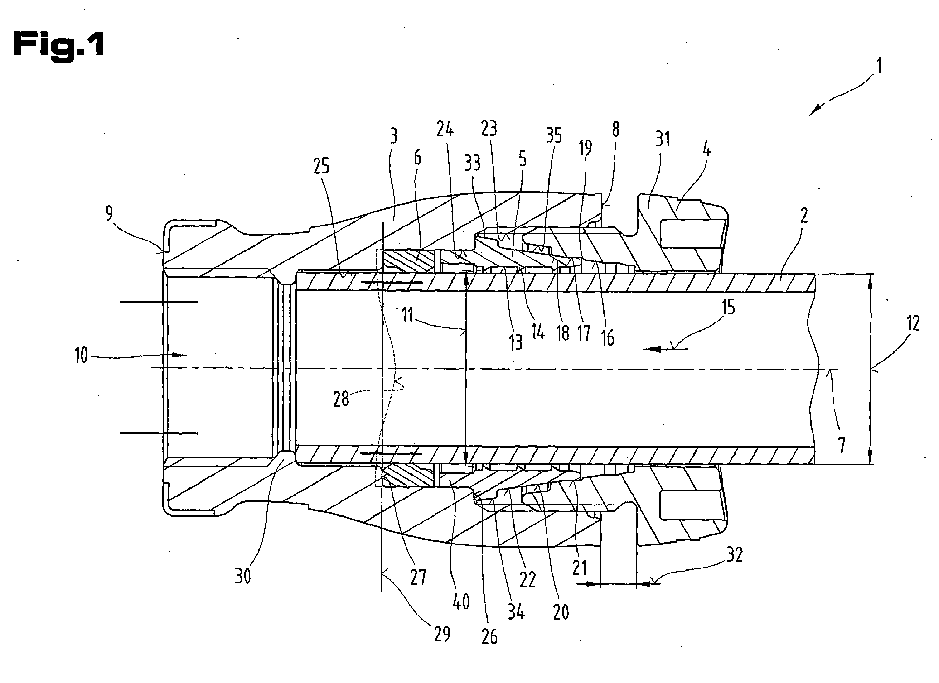

In den Fig. 1 bis 5 ist eine mögliche und gegebenenfalls für sich eigenständige Ausführungsform eines Anschlussstückes 1 für eine klemmende Verbindung mit einem Ende eines runden, insbesondere rohrförmigen, Gegenstandes 2 gezeigt. Zumeist handelt es sich bei dem Gegenstand 2 um handelsübliche Rohrleitungen aus einem Kunststoffwerkstoff, an welchem das Anschlussstück 1 für die Montage einfach aufgeschoben und an dem Gegenstand 2 zugfest in Axialrichtung gehalten bzw. befestigt werden soll. Es sind aber auch metallische Werkstoffe und/oder Legierungen bzw. Mischungen daraus zur Bildung des Gegenstandes 2 möglich. Gleichfalls ist auch eine Kombination unterschiedlicher Werkstoffe miteinander möglich.

Das Anschlussstück 1 ist aus mehreren Bauteilen gebildet und umfasst ein hülsenförmig ausgebildetes Grundgehäuse 3, ein Spannelement 4, zumindest ein Halteelement 5 sowie bevorzugt ein Dichtelement 6, welches innerhalb des Grundgehäuses 3 angeordnet ist. Das Grundgehäuse 3 weist eine Längsachse 7 auf, die sich hier zwischen voneinander distanziert angeordneten, ersten und zweiten Endbereichen 8, 9 erstreckt. Weiters umgrenzt das Grundgehäuse 3 zumindest eine Aufnahmekammer 10, in welche das Spannelement 4 bereichsweise sowie das Halteelement 5 und Dichtelement 6 eingesetzt sind.

Das Spannelement 4 ist gegenüber dem Grundgehäuse 3 relativ dazu im Zusammenwirken eines gegenseitigen, formschlüssigen Eingriffs in Richtung der Längsachse 7 verlagerbar, wobei dies beispielsweise in bekannter Weise durch eine Gewindeanordnung erfolgen kann.

Das Halteelement 5 kann im Bereich seines Umfanges zumindest eine Unterbrechungsstelle aufweisen, welche in Form eines Schlitzes oder Spaltes ausgebildet ist. Diese zuvor beschriebene Unterbrechungsstelle kann, muss jedoch nicht vorgesehen sein und ist vom gewählten Werkstoff des Halteelements 5 abhängig. Dadurch, dass ein eigenes Spannelement 4 zum Zusammenwirken mit dem Halteelement 5 vorgesehen ist, kann das Halteelement 5 gegebenenfalls zusammen mit dem Spannelement 4 in einer vormontierten Stellung einfach in das Grundgehäuse 3 eingesetzt werden.

So ist in der Fig. 1 eine so genannte Ausgangsstellung dargestellt, bei welcher das Spannelement 4 zusammen mit dem Halteelement 5 in einer vorbestimmbaren Position darin angeordnet ist, in welcher der Gegenstand 2 einfach eingeschoben werden kann.

Die Vormontage des Anschlussstücks 1 zur Erzielung der Ausgangsstellung kann derart erfolgen, dass in das Grundgehäuse 3 zuerst das Dichtelement 6 eingesetzt bzw. eingeschoben wird. Daran anschließend wird das Halteelement 5 mit dem Spannelement 4 zu einer Einheit zusammengefügt und diese beiden Bauteile gemeinsam in das Grundgehäuse 3 eingesetzt. Wird das Halteelement 5 mit einer aufweitenden, auf die von der Längsachse 7 abgewendete Seite gerichteten Radialkraft ausgebildet, erfolgt für den Montagevorgang eine ausreichende Halterung bzw. Haltekraft am Spannelement 4.

Zum leichteren Einsetzen des Gegenstandes 2 in das Anschlussstück 1, insbesondere das Halteelement 5 ist es vorteilhaft, wenn ein lichter innerer Querschnitt 11 des Halteelements 5 zumindest gleich, bevorzugt jedoch größer, ist, als ein äußerer Querschnitt 12 des einzusetzenden Gegenstandes 2. Bei dem hier gezeigten Ausführungsbeispiel ist das Halteelement 5 hülsenförmig ausgebildet und mit einer in Richtung auf das Spannelement gerichteten radialen Vorspannung in diesem gehaltert.

Zum besseren gegenseitigen Eingriff des Halteelements 5 an der äußeren Oberfläche des Gegenstandes 2 ist es vorteilhaft, wenn am Halteelement 5 auf einer der Längsachse 7 zugewendeten, inneren Oberfläche 13 zumindest ein über diese vorragendes Rastelement 14 angeordnet ist. Dieses Rastelement 14 kann durch haftreibungserhöhende Mittel, beispielsweise einem Belag aus Korund, zahnartige Vorsprünge oder Einlagerungen, gebildet sein. Bevorzugt sind über den Umfang gesehen mehrere Rastelemente 14 angeordnet, wobei diese aber auch beispielsweise über den Umfang durchlaufende, in Richtung auf die Längsachse 7 vorragende Rastringe gebildet sein können. Die Querschnittsform des oder der Rastelemente 14 im Axialschnitt gesehen, ist in bekannter Weise derart gewählt, dass ein Eindringen dieser in die äußere Oberfläche des Gegenstandes 2 ermöglicht und darüber hinaus eine Auszugsbewegung des Gegenstandes 2 aus dem Halteelement 5 vermieden wird. Darüber hinaus können in Richtung der Längsachse 7 gesehen mehrere dieser Rastelemente 14 hintereinander sowie voneinander distanziert angeordnet sein.

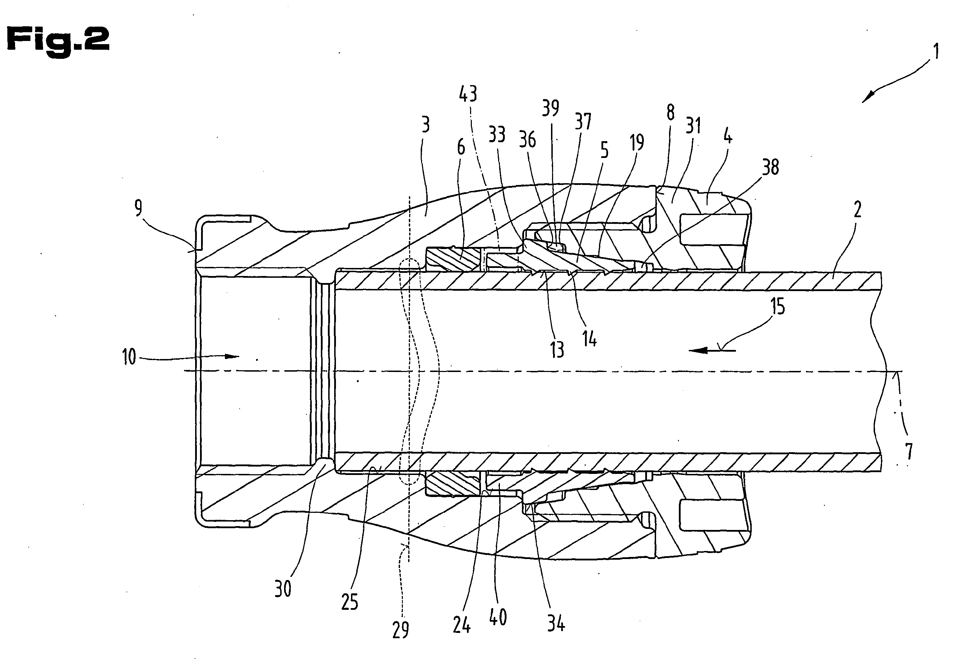

Die Ausgangsstellung der einzelnen, das Anschlussstück 1 bildenden Bauteile, kann vor dem Einbringen des Gegenstandes 2 bzw. dem Aufschieben auf den selben, auch als Auslieferungszustand betrachtet werden, in welchem sich das Anschlussstück 1 als vormontierte Baueinheit darstellt. Damit ist es für den Anwender einfach möglich, ohne weitere, zusätzliche Handhabungsvorgänge, die so vormontierte Einheit auf den Gegenstand 2 bis hin zu einer vordefinierten Stellung aufzuschieben und anschließend das Spannelement 4 relativ gegenüber dem Grundgehäuse 3 in Richtung der Längsachse 7 zu verlagern, um so die in der Fig. 2 dargestellte, erste Kupplungsstellung für das Anschlussstück 1 am Gegenstand 2 zu erzielen.

Zusätzlich ist in der Fig. 1 noch eine Einschubrichtung 15 durch einen Pfeil dargestellt, welche eine Richtung anzeigt, mit der der Gegenstand 2 in das Anschlussstück 1 eingeschoben bzw. eingebracht wird.

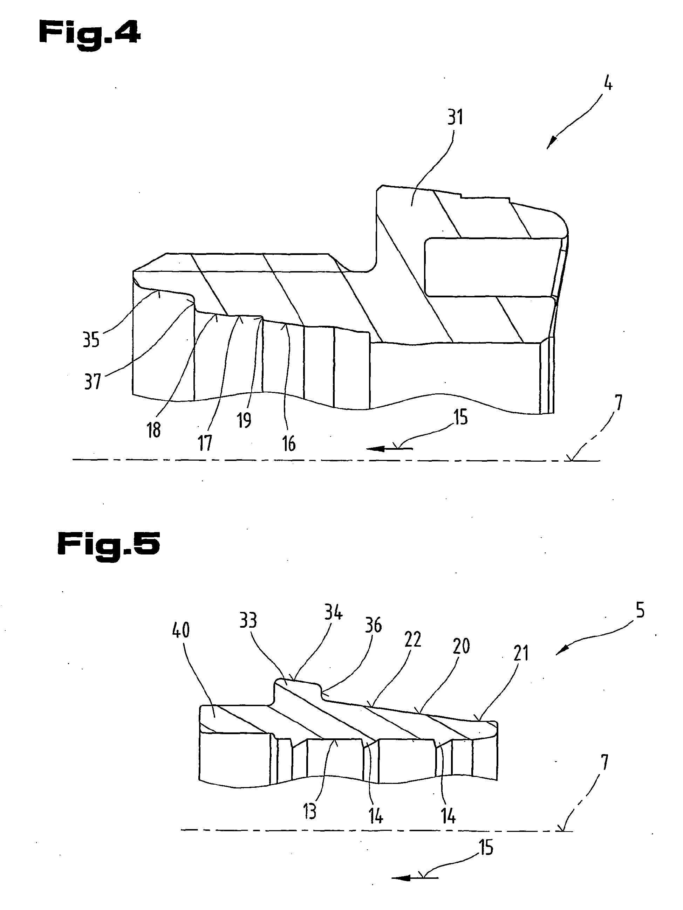

In den Fig. 4 und 5 sind die beiden, die Klemmung für den Gegenstand 2 bewirkenden Bauteile, nämlich das Spannelement 4 sowie das Halteelement 5, in voneinander distanzierter Lage dargestellt.

Das Spannelement 4 weist in Einschubrichtung 15 des Gegenstandes 2 gesehen, mehrere, hintereinander angeordnete Oberflächenabschnitte 16 bis 18 auf. Der in Einschubrichtung 15 gesehen erste Oberflächenabschnitt 16 ist im Bezug auf die Längsachse 7 dieser am nächstliegendsten zugeordnet. Dieser erste Oberflächenabschnitt 16 ist in Einschubrichtung 15 gesehen kegelstumpfförmig erweiternd ausgebildet, wobei anschließend an diesen der zweite Oberflächenabschnitt 17 ausgebildet ist, welcher hier annähernd zylindrisch zur Längsachse 7 ausgerichtet ist. Der erste Oberflächenabschnitt 16 ist somit auf die vom Grundgehäuse 3 abgewendete Seite kegelstumpfförmig verjüngend ausgebildet. Weiters ist aus der Darstellung der Fig. 4 noch zu ersehen, dass zwischen den beiden Oberflächenabschnitten 16 und 17 mindestens ein Positionierelement 19 ausgebildet ist. Das am Spannelement 4 angeordnete Positionierelement 19 ist bei diesem hier gezeigten Ausführungsbeispiel durch zumindest eine in Richtung auf die Längsachse 7 und über den zweiten annähernd zylindrisch ausgebildeten Oberflächenabschnitt 17 vorspringende Schulter gebildet.

Das Halteelement 5 weist auf der dem Spannelement 4 zugewendeten Seite im Bereich seiner äußeren Oberfläche 20 einen gegengleich zu dem ersten kegelstumpfförmig erweiternden Oberflächenabschnitt 16 und dem zweiten annähernd zylindrischen Oberflächenabschnitt 17 des Spannelements 4 ausgerichteten, ersten annähernd zylindrischen und zweiten kegelstumpfförmigen Oberflächenbereich 21, 22 auf.

In der in der Fig. 1 dargestellten Ausgangsstellung liegt der annähernd zylindrische Oberflächenbereich 21 des Halteelementes 5 zumindest bereichsweise am ebenfalls annähernd zylindrisch ausgebildeten Oberflächenabschnitt 17 des Spannelements 4 an, wobei zusätzlich noch das Halteelement 5 mit dem Positionierelement 19 des Spannelements 4 in dieser Stellung zusammenwirkt. Durch die zuvor beschriebene, radiale Vorspannkraft des Halteelements 5 in Richtung auf das Spannelement 4 wird weiters im Zusammenwirken des zylindrisch ausgebildeten Oberflächenabschnitts 17 mit dem ebenfalls zylindrisch ausgebildeten Oberflächenbereich 21 eine vorpositionierte Halterung der beiden Bauteile zueinander erzielt. Durch die Anlage bzw. die Abstützung des Halteelements 5 an dem Positionierelement 19 wird eine relative Lage zwischen dem Spannelement 4 und dem Halteelement 5 für die Ausgangsstellung vorbestimmt.

Weiters wird durch die zuvor beschriebene, radiale Vorspannkraft des Halteelements 5 das Einschieben bzw. Einbringen des Gegenstandes 2 in das Anschlussstück 1, insbesondere das Halteelement 5, wesentlich erleichtert, da während diesem Vorgang eine rundum durchlaufende Anlage des Gegenstandes 2 am Halteelement 5, insbesondere dessen Rastelement 14 oder Rastelementen 14, vermieden ist.

Die vom Grundgehäuse 3 umgrenzte Aufnahmekammer 10 ist in Einschubrichtung 16 des Gegenstandes 2 sowie im Axialschnitt gesehen, ausgehend vom ersten Endbereich 8 hin in Richtung auf den bzw. zum zweiten Endbereich 9, stufen- bzw. treppenförmig verjüngend ausgebildet. Durch diese stufenförmigen Verjüngung werden bei diesem hier gezeigten Ausführungsbeispiel mehrere, hintereinander angeordnete Abschnitte 23 bis 25 gebildet, welche bevorzugt annähernd zylindrisch ausgebildet sind. Im Übergangsbereich zwischen den stufenförmigen Abschnitten 23 und 24 sowie 24 und 25 sind senkrecht zur Längsachse 7 ausgerichtete Übergangsflächen 26, 27 ausgebildet.

Das Spannelement 4 ist bei diesem hier gezeigten Ausführungsbeispiel im Bereich des ersten Abschnitts 23 angeordnet. Das Haltelement 5 ist zum überwiegenden Teil ebenfalls in diesem Abschnitt 23 angeordnet und kann gegebenenfalls in den, in Einschubrichtung 15 gesehen, nachgeordneten, weiteren Abschnitt 24 zumindest bereichsweise sich hineinerstrecken. Das Dichtelement 6 ist bei diesem hier gezeigten Ausführungsbeispiel im Bereich jenes stufenförmigen Abschnitts 24 angeordnet, der dem ersten Abschnitt 23 zum gegenseitigen, formschlüssigen Eingriff zwischen dem Grundgehäuse 3 und dem Spannelement 4 nachgeordnet ist.

Weiters ist noch in der Fig. 1 vereinfacht dargestellt, dass dem Dichtelement 6 im Grundgehäuse 3 auf der vom Spannelement 4 abgewendeten Seite eine Abstützfläche 28 zugeordnet ist, welche bezüglich einer senkrecht zur Längsachse 7 ausgerichteten Ebene 29 über den Umfang gesehen einen in senkrechter Richtung zur Ebene 29 unterschiedlichen Abstand aufweist, wie dies vereinfacht in strichlierten Linien angedeutet ist. So kann die Abstützfläche 28 über den Umfang gesehen bezüglich der senkrecht zur Längsachse 7 ausgerichteten Ebene 29 einen wellenförmigen Verlauf aufweisen. So kann abweichend von dem dargestellten Dichtelement 6 dieses durch einen hier nicht näher dargestellten O-Ring gebildet sein, welcher an der Abstützfläche 28 zur Anlage gebracht wird. Dies hat den Vorteil, dass beim Einbringen des Gegenstandes 2 in das Anschlussstück 2 das einzubringende Stirnende des Gegenstandes 2 nur über einen Teilbereich des Dichtelements 6 für die spätere Abdichtung zur Anlage gebracht wird, und erst bei weiterem Einschieben ein vollständiges Umschließen des Gegenstandes 2 durch das Dichtelement 6 erfolgt. Dadurch können die während dem Durchschieben des Gegenstandes 2 durch das Dichtelement 6 auftretenden Montagekräfte reduziert werden, da über den Umfang gesehen nur ein Teilbereich des Dichtelements 6 zur Anlage an der äußeren Oberfläche des Gegenstandes 2 gebracht wird und so der Einsetzvorgang und damit das Umschließen bzw. Umspannen in Abhängigkeit vom Einschubweg erfolgt.

Unabhängig davon wäre es aber auch noch möglich, dass im Grundgehäuse 3 in zumindest einem der Abschnitte 24, 25, insbesondere jenem, der dem Abschnitt 23 zum gegenseitigen formschlüssigen Eingriff zwischen dem Grundgehäuse 3 und dem Spannelement 4 nachgeordnet ist, zumindest eine nur vereinfacht in strichlierten Linien in der Fig. 2 gezeigte hutförmige Vertiefung in Form eines Einstiches für die Aufnahme eines O-Rings vorgesehen bzw. einer dieser Abschnitte 24, 25 durch eine solche Vertiefung gebildet ist. Dabei weist die Vertiefung bezüglich der senkrecht zur Längsachse 7 ausgerichteten Ebene 29 über den Umfang gesehen einen unterschiedlichen Abstand auf, der z.B. durch einen wellenförmigen Längsverlauf entlang des Umfangs gebildet sein kann. Der unterschiedliche Abstand bezüglich der Ebene 29 ist so zu verstehen, dass je nach der gewählten Lage bzw. der Position der Ebene 29 relativ zur nutförmigen Vertiefung die Distanzierung derselben in Abhängigkeit vom Abstand nur auf einer Seite der Ebene 29 oder aber eine beidseitige Distanzierung in senkrechter Richtung zur Ebene 29 erfolgt. Dadurch wird wiederum für den einzubringenden Gegenstand 2 am Beginn des Einsetzvorganges eine über den Umfang gesehen unterbrochene bzw. nicht durchlaufende Anlage der äußeren Oberfläche am Dichtelement 6 erzielt und erst bei weiterem Einschieben eine vollständige Umschließung erreicht, mit welcher die vollständige Abdichtung im Bereich der äußeren Oberfläche des Gegenstandes 2 erfolgt.

Diese über den Umfang gesehen aus der Ebene 29 abweichende Anordnung der nutförmigen Vertiefung für das Dichtelement 6, insbesondere den O-Ring, kann nicht nur bei dem hier beispielhaft dargestellten Grundgehäuse 3 Anwendung finden, sondern auch bei allen anderen überschiebbaren Muffenkörpern eingesetzt werden, unabhängig davon, ob eine Klemmvorrichtung, wie das Spannelement 4 im Zusammenwirken mit dem Halteelement 5, vorhanden ist oder nicht. Solche Muffenkörper können entweder durch eigene Bauteile gebildet sein oder sind durch Teile einer überschiebbaren Rohrverbindung gebildet. Dabei kann es sich auch um Kanalrohre oder Ableitungen aus den unterschiedlichsten Werkstoffen (Metalle, Kunststoffe) sowie Dimensionen handeln, die durch verschiedene Fertigungsverfahren, wie Gießen, Spritzen, Umformen, Extrudieren, Strangpressen oder dergleichen hergestellt sind. Anstelle des O-Rings können aber auch anders ausgebildete Dichtelemente 6, wie z.B. Dichtkörper mit einer oder mehreren Dichtlippen, Labyrinthdichtungen oder dergleichen Anwendung finden.

Im Anschluss an das Dichtelement 6 ist dem Grundgehäuse 3 der dritte stufenförmige Abschnitt 25 angeordnet, der einen lichten Querschnitt aufweist, der zumindest gleich oder größer dem äußeren Querschnitt des aufzunehmenden Gegenstandes 2 ist. Weiters kann zur Anschlagbegrenzung der Einschubbewegung des Gegenstandes 2 in das Grundgehäuse 3 an diesem im Bereich des dritten stufenförmigen Abschnitts 25 an der von den vorher gehenden Abschnitten 23, 24 abgewendeten Seite zumindest ein in Richtung auf die Längsachse 7 vorragender Anschlag 30 angeordnet sein. Dadurch wird eine eindeutige Lagepositionierung zwischen dem Anschlussstück 1 und dem einzuschiebenden Gegenstand 2 geschaffen.

Weiters ist bei dem aus der Fig. 4 dargestellten Spannelement 4 zu ersehen, dass anschließend in Einschubrichtung 15 an den zweiten zylindrisch ausgebildeten Oberflächenabschnitt 17 auf der vom Positionierelement 19 abgewendeten Seite ein dritter, sich ebenfalls kegelförmig erweiternder Oberflächenabschnitt 18 angeordnet ist. Dabei können der erste und dritte kegelstumpfförmig ausgebildete Oberflächenabschnitt 16 sowie 18 des Spannelements 4 Teilflächen einer diese einhüllende Kegelstumpfmantelfläche ausbilden. Bei dieser Anordnung stellt der zylinderförmige Oberflächenabschnitt 17 eine Abstufung im Bereich der durchlaufenden Kegelstumpfmantelfläche dar.

Weiters ist aus einer Zusammenschau der Fig. 1 und 4 zu ersehen, dass das Spannelement 4 auf der von der Längsachse 7 abgewendeten Seite zumindest einen, insbesondere flanschförmig, ausgebildeten Ansatz 31 aufweist, der in der Ausgangsstellung - Fig. 1 - in Richtung der Längsachse 7 gesehen in einer vorbestimmbaren Distanz 32 beabstandet ist. Diese Distanz 32 entspricht einem Kupplungsweg zwischen dem Grundgehäuse 3 und dem Spannelement 4. Nach der relativen Verstellung zueinander, zwischen dem Grundgehäuse 3 und dem Spannelement 4, wird diese Distanz 32 soweit verringert, dass in der ersten Kupplungsstellung - siehe Fig. 2 - der Ansatz 31 des Spanneelements 4 am Grundgehäuse 3 abgestützt ist bzw. an der im ersten Endbereich 8 angeordneten Stirnseite zur Anlage kommt. Dadurch wird, falls der gegenseitige, formschlüssige Eingriff zwischen dem Spannelement 4 und dem Grundgehäuse 3 durch eine im Bereich des ersten stufenförmigen Abschnitts 23 angeordnete Gewindeanordnung gebildet ist, eine Anschlagbegrenzung für diese Einschraubbewegung gebildet.

Aus einer Zusammenschau der Fig. 1 und 5 ist weiters zu ersehen, dass das Halteelement 5 auf der von der Längsachse 7 abgewendeten Seite in Einschubrichtung 15 gesehen - also auf der vom ersten zylinderförmigen Oberflächenbereich 21 abgewendeten Seite - anschließend an den kegelstumpfförmigen Oberflächenbereich 22 zumindest einen diesen überragenden, insbesondere flanschförmig ausgebildeten Vorsprung 33 aufweist. In der in Fig. 1 gezeigten Ausgangsstellung wird, wie dies bereits zuvor beschrieben, das Spannelement 4 gemeinsam mit dem Halteelement 5 in das Grundgehäuse 3 eingesetzt, wobei dies solange erfolgt, bis dass in der Ausgangsstellung der Vorsprung 33 an der im Übergangsbereich zwischen dem ersten und zweiten stufenförmigen Abschnitt 23, 24 der Aufnahmekammer 10 des Grundgehäuses 3 ausgebildete Übergangsfläche 26 in axialer Richtung abgestützt ist.

Dieser Vorsprung 33 kann über den Umfang nur bereichsweise aber auch vollständig umfänglich durchlaufend angeordnet bzw. ausgebildet sein. Weiters weist der Vorsprung 33 an der von der Längsachse 7 abgewendeten Seite zumindest bereichsweise eine kegelstumpfförmige, in Richtung auf das Spannelement 4 verjüngend ausgebildete Stützfläche 34 auf. Dabei ist bevorzugt ein Kegelwinkel dieser Stützfläche 34 im Bezug zur Längsachse 7 gleich zu dem ersten kegelstumpfförmigen Oberflächenbereich 22 des Halteelements 5 ausgebildet.

Betrachtet man die in der Fig. 2 dargestellte erste Kupplungsstellung, befindet sich der Ansatz 31 des Spannelements 4 anliegend an der Stirnfläche des Grundgehäuses 3 und gleichzeitig stützt sich der Vorsprung 33 des Halteelementes 5 an der Übergangsfläche 26 zwischen den beiden stufenförmige Abschnitten 23, 24 daran ab. Die zuvor beschriebene Stützfläche 34 des Vorsprungs 33 wirkt in dieser ersten Kupplungsstellung mit einer weiteren am Spannelement 4 ausgebildeten Stützfläche 35 zusammen, welche bevorzugt gegengleich zur Neigung der Stützfläche 34 ausgerichtet ist.

Durch das Einsetzen des Spannelements 4, ausgehend von der in der Fig. 1 dargestellten Ausgangsstellung hin in die in Fig. 2 dargestellten ersten Kupplungsstellung wird das Halteelement 5 über seinen Umfang gesehen im Zusammenwirken der konisch bzw. kegelstumpfförmig ausgebildeten Oberflächenabschnitte 16 bzw. 18 am Spannelement 4 sowie dem Oberflächenbereich 22 des Halteelements 5 hin in Richtung auf die Längsachse 7 verformt, wie dies für die Erreichung der ersten Kupplungsstellung notwendig und bekannt ist. Dabei kann die zuvor beschriebene Unterbrechungsstelle eine Spaltweite aufweisen, welche als zusätzliche umfängliche Anschlagbegrenzung beim Erreichen der ersten bzw. aber auch zweiten Kupplungsstellung wirkt. Im Zuge dieser Querschnittsverringerung des Halteelements 5 werden die an der inneren Oberfläche 13 angeordneten Rastelemente 14 in die äußere Oberfläche des Gegenstandes 2 zumindest bereichsweise hineingedrückt, wodurch ein formschlüssiger Eingriff bzw. eine formschlüssige Verbindung zwischen dem Halteelement 5 und dem Gegenstand 2 gebildet wird.

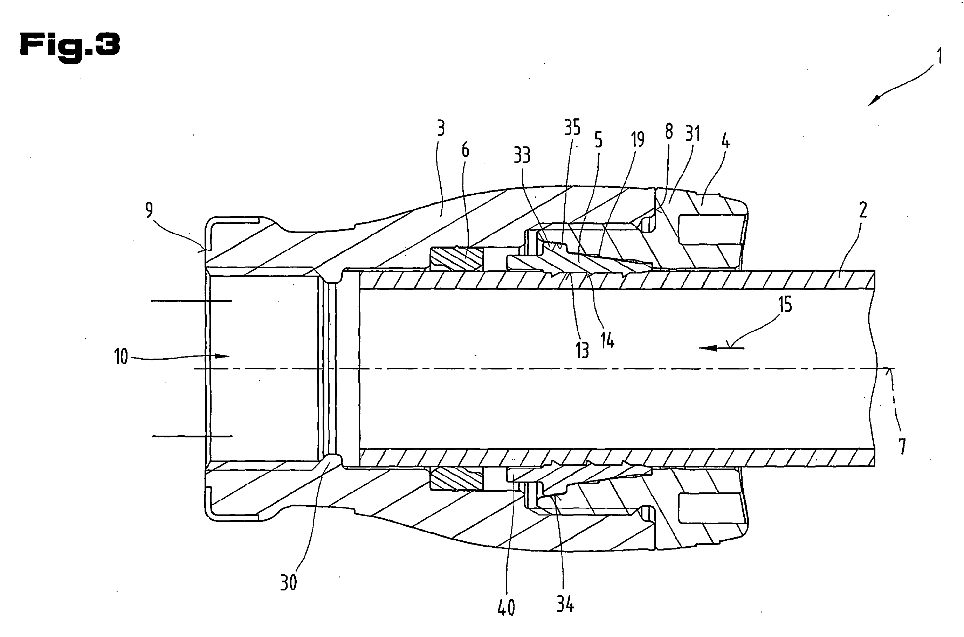

Wird beispielsweise das Anschlussstück 1 relativ gegenüber dem darin eingesetzten Gegenstand 2 ortsfest gehalten und es erfolgt eine Zugbeanspruchung des Gegenstandes 2 in Richtung der Längsachse 7 entgegen der Einschubrichtung 15, wird der Gegenstand 2 relativ gegenüber dem Anschlussstück 1 entgegen der Einschubrichtung 15 relativ dazu verlagert. Diese Verlagerung ist in der in Fig. 3 dargestellten, zweiten Kupplungsstellung gezeigt, wobei diese aber auch durch einwirkende Mediumdrücke und/oder durch ein Nachsetzen des Gegenstandes 2 bzw. Rohres im Haltebereich erfolgen kann. Dabei gleiten die konisch bzw. kegelig zueinander ausgebildeten Oberflächenabschnitte 16 sowie gegebenenfalls 18 und der Oberflächenbereich 22 sowie die beiden ebenfalls kegelig bzw. konisch ausgebildeten Stützflächen 34, 35 aneinander ab, wodurch eine weitere Verringerung des Querschnitts des Halteelements 5 erfolgt. Dabei dringt bzw. dringen das oder die Rastelemente 14 weiter in die äußere Oberfläche des Gegenstandes 2 ein.

Der Vorsprung 33 weist auf der dem Spannelement 4 zugewandten Seite eine bevorzugt senkrecht zur Längsachse 7 ausgerichtete Stirnfläche 36 auf, welche in der zweiten Kupplungsstellung - siehe Fig. 3 - an einer dazu gegengleich am Spannelement 4 ausgebildeten, weiteren Stirnfläche 37 zur Anlage kommt. Dadurch wird eine Anschlagbegrenzung für den Verstellweg des Gegenstandes 2 relativ gegenüber dem Anschlussstück 1 erzielt. Um diese Bewegung durchführen zu können, sind zwischen den relativ zueinander bewegten Bauteilen entsprechende Aufnahmeräume 38, 39 vorzusehen. So ist der erste Aufnahmeraum 38 dem ersten kegelstumpfförmig ausgebildeten Oberflächenabschnitt 16 des Spannelements 4 in Einschubrichtung des Gegenstandes 2 gesehen vorgeordnet. Auch im Bereich dieses Aufnahmeraums 38 kann eine Anschlagbegrenzung für den Verstellweg des Gegenstandes 2, insbesondere des Halteelements 5 relativ gegenüber dem Anschlussstück 1, bei entsprechender gegenseitiger Ausbildung der Bauteile vorgesehen sein. So wäre es möglich, nur eine der beiden Anschlagbegrenzungen vorzusehen oder aber diese beiden miteinander zu kombinieren. Der weitere Aufnahmeraum 39 bildet sich durch die in der Fig. 2 voneinander distanziert angeordneten Stirnflächen 36, 37. Bei diesem hier gezeigten Ausführungsbeispiel ist der kegelstumpfförmige Oberflächenbereich 22 des Halteelements 5 in Richtung der Längsachse 7 größer, als die Summe des ersten und zweiten, sowie gegebenenfalls des dritten Oberflächenabschnitts 16 bis 18 des Spannelements 4.

Bei der in der Fig. 2 dargestellten ersten Kupplungsstellung ist das Halteelement 5 mit seinem Übergangsbereich zwischen dem ersten zylindrisch ausgebildeten und dem zweiten kegelstumpfförmig ausgebildete Oberflächenbereich 21, 22 in einem am Spannelement 4 ausgebildeten Übergangsbereich zwischen dem ersten kegelstumpfförmig ausgebildeten Oberflächenabschnitt 16 und dem Aufnahmeraum 38 angeordnet.

Bei den in den Fig. 1 bis 3 dargestellten Anschlussstücken 1 ist das Dichtelement 6 in der in das Grundgehäuse 3 eingesetzten Position gezeigt. Zur Erzielung einer Abdichtung zwischen der äußeren Oberfläche des Gegenstandes 2 und dem Grundgehäuse 3 ist eine lichte Weite des Dichtelements 6 kleiner, als eine Außenabmessung des in das Grundgehäuse 3 einzubringenden Gegenstandes 2. Um eine relative Verlagerung des Dichtelements 6 relativ gegenüber dem Grundgehäuse 3 zu verhindern, weist das Halteelement 5 auf der vom Spannelement 4 abgewendeten Seite zumindest ein, in Richtung auf das Dichtelement 6 vorragendes Ansatzstück 40 auf Dabei kann das Ansatzstück 40 derart ausgebildet sein, das dieses in der Ausgangsstellung in radialer Richtung am Grundgehäuse 3, insbesondere dem zweiten Abschnitt 24, abgestützt ist.

Es sei an dieser Stelle bemerkt, dass das hier dargestellte und beschriebene Anschlussstück 1 nur beispielhaft für eine Vielzahl von möglichen Ausbildungen beschrieben worden ist. Im besonderen gilt dies für die Raumform des Grundgehäuses 3. So kann das Anschlussstück 1 auch beispielsweise einen Rohrverbinder, ein Winkelstück oder aber auch ein Anschlussteil mit Außengewinde usw. bilden und ist nicht auf die gezeigte Ausführungsform beschränkt.

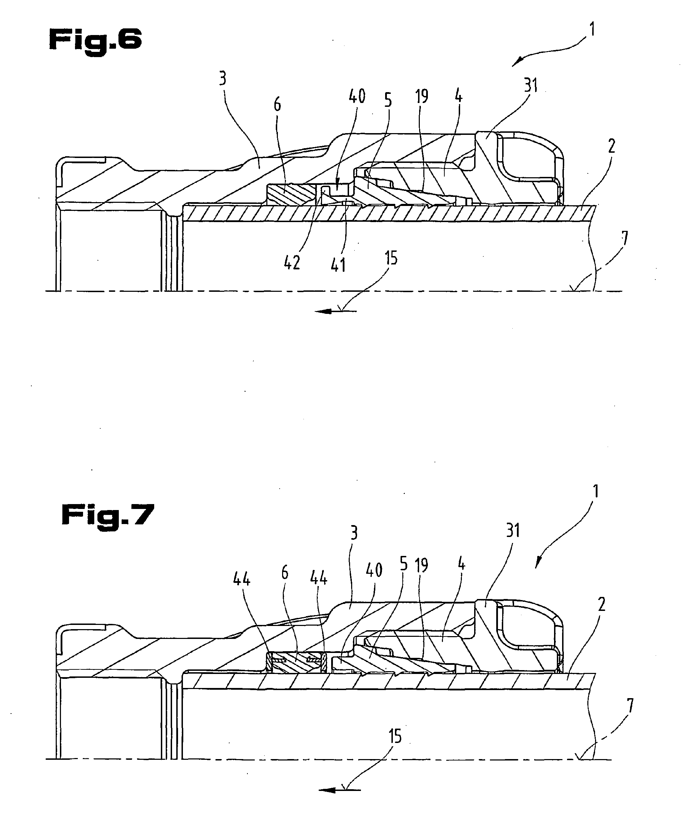

In der Fig. 6 ist eine weitere mögliche und für sich eigenständige Ausbildung des Anschlussstücks 1 gezeigt. Um unnötige Wiederholungen zu vermeiden, wird auf die detaillierte Beschreibung in den vorangegangenen Fig. 1 bis 5 hingewiesen bzw. Bezug genommen. Gleichfalls werden für gleiche Teile gleiche Bauteilbezeichnungen bzw. Bezugszeichen, wie in den vorangegangenen Fig. 1 bis 5 verwendet.

Das Anschlussstück 1 umfasst wiederum das Grundgehäuse 3, das Spannelement 4, das Halteelement 5 sowie das Dichtelement 6. In das Grundgehäuse 3 ist wiederum zur Halterung der Gegenstand 2 in einer darin eingesetzten Position dargestellt. Diese Darstellung entspricht der ersten Kupplungsstellung gemäß der Darstellung der Fig. 2.

Im Gegensatz zu den Ausführungsformen des Halteelements 5 in den vorangegangenen Fig. 1 bis 5 weist hier zur Lagepositionierung des Dichtelements 6 gegenüber dem Grundgehäuse 3 das Halteelement 5, im Axialschnitt gesehen, ein L-förmig ausgebildete Ansatzstück 40 auf. Dabei ist ein erster Schenkel 41 des L-förmig ausgebildeten Ansatzstücks 40 parallel zur Längsachse 7 und ein weiterer Schenkel 42 auf die von der Längsachse 7 abgewendete Seite ragend ausgerichtet.

Ist das Ansatzstück 40 nicht bzw. nur bereichsweise vorhanden, kann zwischen dem Halteelement 5 und dem Dichtelement 6 zumindest ein zusätzliches Distanzelement 43 angeordnet sein, wie dies in der Fig. 2 vereinfacht in strichpunktierten Linien dargestellt ist.

In der Fig. 7 ist eine gegebenenfalls weitere und für sich eigenständige Ausbildung des Ansatzstücks 1 gezeigt, wobei wiederum, um unnötige Wiederholungen zu vermeiden, auf die detaillierte Beschreibung in den vorangegangenen Fig. 1 bis 6 hingewiesen bzw. Bezug genommen wird. Gleichfalls werden für gleiche Bauteile gleiche Bauteilbezeichnungen bzw. Bezugszeichen, wie in den vorangegangen Fig. 1 bis 6 verwendet.

Das Anschlussstück 1 umfasst das Grundgehäuse 3, das Spannelement 4, das Halteelement 5 sowie das darin eingesetzte Dichtelement 6, welches gegenüber dem Gegenstand 2 eine Abdichtung gegenüber dem Grundgehäuse 3 bewirkt.

Bei diesem hier gezeigten Ausführungsbeispiel ist am Halteelement 5 wiederum zumindest ein Ansatzstück 40 vorgesehen, welches in Richtung auf das Dichtelement 6 vorragt. Zusätzlich sind dem Dichtelement 6 auf zumindest einer, bevorzugt jedoch beiden, in Richtung der Längsachse 7 voneinander distanzierten Endbereichen jeweils ein Stützelement 44 vorgeordnet. Dieses oder diese Stützelemente 44 können beispielsweise durch kreisringförmig ausgebildete Scheiben gebildet sein, welche auf unterschiedlichste Art und Weise mit dem Dichtelement 6 verbunden sein können.

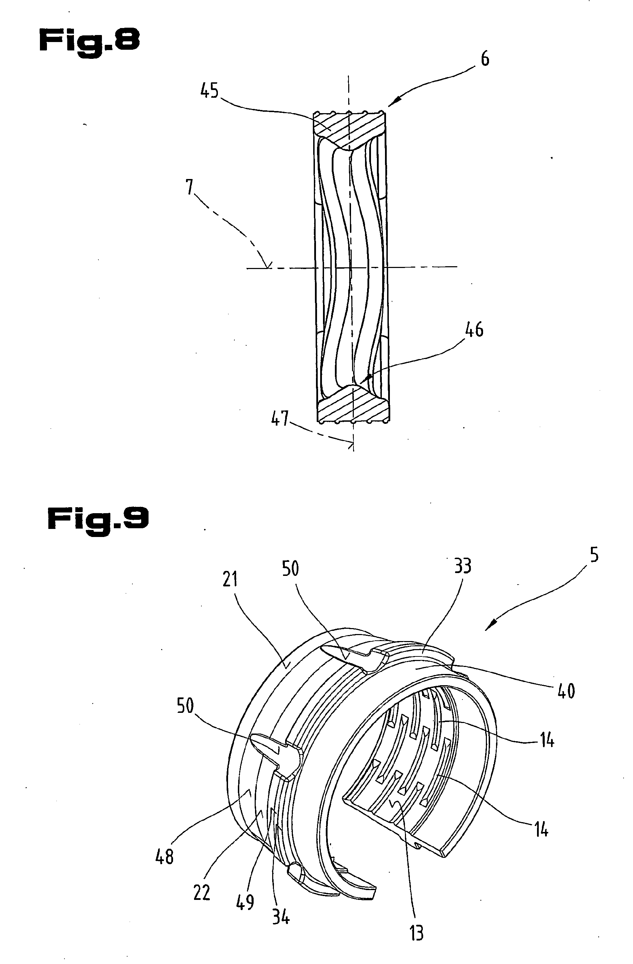

In der Fig. 8 ist eine mögliche und gegebenenfalls sich eigenständige Ausbildung des Dichtelements 6 gezeigt. Dieses Dichtelement 6 weist einen Grundkörper 45 auf und dient für eine klemmende Verbindung des Anschlussstücks 1 mit einem Ende des runden, insbesondere rohrförmigen Gegenstandes 2.

Am Grundkörper 45 ist zumindest ein, über den Umfang umlaufend ausgebildeter und zur Anlage am Gegenstand 2 ausgebildeter Dichtbereich 46 vorgesehen. Dieser Dichtbereich 46 ist in einer senkrecht zur Längsachse 7 ausgerichteten Ebene 47 über den Umfang gesehen in einem unterschiedlichen Abstand zu dieser Ebene 47 angeordnet. So kann beispielsweise der Dichtbereich 46 über den Umfang gesehen, bezüglich der senkrecht zur Längsachse 7 ausgerichteten Ebene 47, wellenförmig ausgebildet sein, wobei bevorzugt die Aufteilung der Versetzung bezüglich der Ebene 47 symmetrisch über den Umfang gewählt wird.

So kann beispielsweise der Dichtbereich 46 im Axialschnitt gesehen wulstförmig in Richtung auf die Längsachse 7 ausgebildet sein. Unabhängig davon wäre es aber auch möglich den Dichtbereich 46 durch zumindest eine Dichtlippe auszubilden. Unabhängig davon wäre es aber auch noch möglich, dass eine am Grundkörper 45 an der von der Längsachse 7 abgewendeten Seite angeordnete Fläche im Axialschnitt gesehen wellenförmig ausgebildet ist, da so eine Art Labyrinthdichtung, zwischen dem äußeren Umfang des Dichtelements 6 und dem Grundgehäuse 3, erzielbar ist.

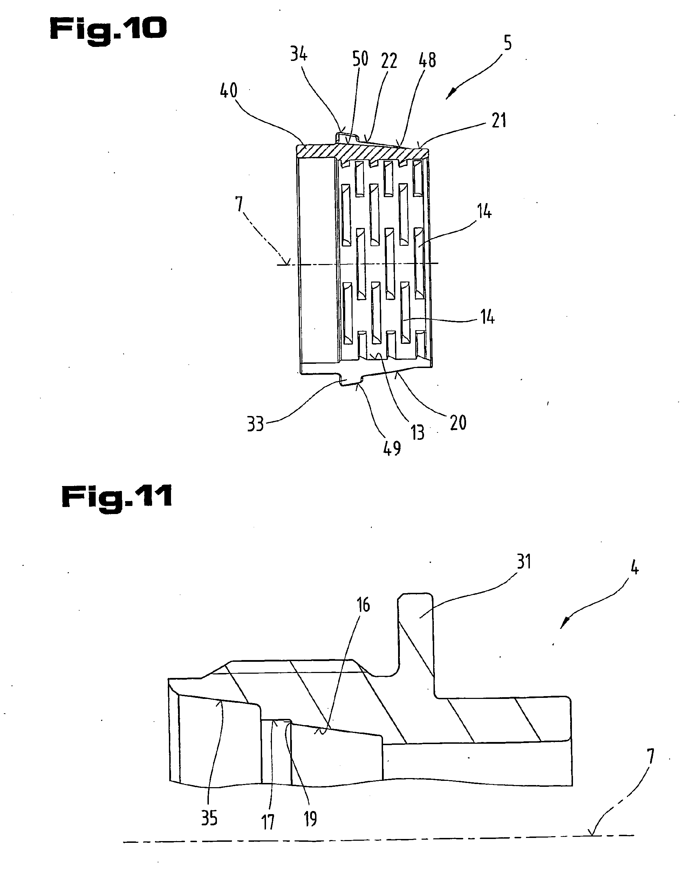

In den Fig. 9 und 10 ist eine weitere mögliche und gegebenenfalls für sich eigenständige Ausbildung des Halteelements 5 gezeigt, wobei wiederum, um unnötige Wiederholungen zu vermeiden, auf die detaillierte Beschreibung in den vorangegangenen Fig. 1 bis 8 hingewiesen bzw. Bezug genommen wird. Gleichfalls werden für gleiche Bauteile gleiche Bezugszeichen bzw. Bauteilbezeichnungen, wie in den vorangegangenen Fig. 1 bis 8, verwendet.

Das Halteelement 5 weist über seinen Umfang gesehen wiederum die bereits zuvor beschriebene Unterbrechungsstellung in Form eines Spaltes bzw. Schlitzes auf, um die Querschnittsveränderung ausgehend von der Ausgangsstellung bis hin zur ersten bzw. zweiten Kupplungsstellung durchführen zu können. In der zweiten Kupplungsstellung liegen bevorzugt die einander zugewendeten Spaltflächen aneinander als weitere Anschlagbegrenzung aneinander an. Im Bereicli der äußeren Oberfläche 20 des Halteelements 5 ist wiederum an dem dem Spannelement 4 zugewandten Ende der erste zylindrisch ausgebildete Oberflächenbereich 21 angeordnet. Weiters weist das Halteelement 5 auch den über die äußere Oberfläche 20 vorragenden Vorsprung 33 auf, welcher bei diesem hier gezeigten Ausführungsbeispiel segmentweise über den Umfang verteilt vorgesehen ist. Gleichfalls ist wiederum der zweite kegelstumpfförmig ausgebildete Oberflächenbereich 22 vorgesehen, welcher mit dem gegengleich dazu ausgebildeten ersten Oberflächenabschnitt 16 des Spannelements 4 gemäß der nachfolgenden Fig. 11 zusammenwirkt. Bei diesem hier gezeigten Ausführungsbeispiel ist zwischen dem zylinderförmigen Oberflächenbereich 21 und dem zweiten kegelstumpfförmigen Oberflächenbereich 22 ein im Axialschnitt gesehen dritter Oberflächenbereich 48 ausgebildet, der gegenüber dem kegelstumpfförmigen Oberflächenbereich 22 eine in Richtung auf die Längsachse 7 gerichtete, größere Neigung aufweist. Dabei kann der dritte Oberflächenbereich 48 im Axialschnitt gesehen eine konvexe Krümmung aufweisen. Dies dient dazu, eine gewisse Freistellung und Minimierung der gegenseitigen Anlageflächen zwischen dem Halteelement 5 und dem Spannelement 4 zu erreichen, um so die zu überwindenden Reibungskräfte für das Anziehen des Spannelements 4 zu minimieren.

Gleichfalls ist es auch möglich, am Vorsprung 33 an der von der Längsachse 7 abgewendeten, sowie dem Spannelement 4 zugewendeten Seite im Axialschnitt gesehen eine Übergangsfläche 49 vorzusehen, die gegenüber der kegelstumpfförmig verjüngend ausgebildeten Stützfläche 34 eine in Richtung auf die Längsachse 7 gerichtete größere Neigung aufweist. Auch diese Übergangsfläche 49 kann im Axialschnitt gesehen eine konvexe Krümmung aufweisen. Dadurch werden auch in diesem Bereich die zusammenwirkenden Stützflächen 34, 35 minimiert.

Wie weiters besser aus der Fig. 9 zu ersehen ist, sind über den äußeren Umfang bzw. der äußeren Oberfläche 20 des Halteelements 5 mehrere bevorzug symmetrisch gleichmäßige, über den Umfang verteilte sowie in Richtung der Längsachse 7 erstreckende Ausnehmungen 50 vorgesehen, welche sich bereichsweise in die äußere Oberfläche 20 hinein erstrecken und ausgehend vom zylinderförmigen Oberflächenbereich 21 bis hin zum Vorsprung 33 und auch diesen durchsetzend angeordnet sind. Bevorzugt gehen die Ausnehmungen 50 ebenflächig in das oder die Ansatzstücke 40 im Bereich von deren äußeren Oberfläche über.

Zum gegenseitigen Eingriff weist das Halteelement 5 an dessen inneren Oberfläche 13 mehrere, über den Umfang gesehen, verteilt angeordnete Rastelement 14 auf, die in Richtung der Längsachse 7 gesehen hintereinander sowie voneinander distanziert angeordnet sind. Hier sind die Rastelemente 14 über den Umfang gesehen nicht durchlaufend sondern nur bereichsweise angeordnet, wobei die in Richtung der Längsachse 7 gesehen unmittelbar hintereinander angeordnete Rastelemente 14 in Umfangsrichtung zusätzlich gegeneinander versetzt angeordnet sind.

Die innere Oberfläche 13 des Halteelements 5, an welcher die Rastelemente 14 angeordnet sind, kann bezüglich der Längsachse 7 in Richtung derselben einen unterschiedlichen Längsverlauf aufweisen. So kann die innere Oberfläche 13 annähernd zylindrisch und/oder kegelstumpfförmig und/oder konvex gekrümmt und/oder konkav gekrümmt ausgebildet sein. Je nach Wahl der inneren Oberfläche 13 kann des Klemmverhalten sowie gegebenenfalls das Einbringen des Gegenstande 2 auf unterschiedliche Einsatzbedingungen abgestimmt werden.

Das in Fig. 11 dargestellte Spannelement 4 ist zum Zusammenwirken mit dem in den Fig. 9 und 10 dargestellten Halteelement 5 vorgesehen und kann für sich eine weitere mögliche und gegebenenfalls für sich eigenständige Ausbildung darstellen, wobei wiederum, um unnötige Wiederholungen zu vermeiden, auf die detaillierte Beschreibung in den vorangegangenen Fig. 1 bis 10 hingewiesen bzw. Bezug genommen wird. Gleichfalls werden für gleiche Bauteile gleiche Bezugszeichen bzw. Bauteilbezeichnungen, wie in den vorangegangenen Fig. 1 bis 10, verwendet.

Das Spannelement 4 weist zum Zusammenwirken mit dem Halteelement 5 in jenem der Längsachse 7 nächstliegenden Bereich den kegelstumpfförmigen Oberflächenabschnitt 16 auf. Anschließend an diesen ist das Positionierelement 19 ausgebildet, welches den unmittelbar daran anschließenden, zweiten zylinderförmigen Oberflächenabschnitt 17 in Richtung auf die Längsachse 7 überragt und zum Zusammenwirken mit dem Halteelement 5 vorgesehen ist. Die Ausbildung des Ansatzes 33 zum Zusammenwirken mit dem Grundgehäuse 3 kann gemäß den zuvor beschriebenen Ausführungsformen entsprechen.

Die einzelnen zuvor beschriebenen Bauteile, nämlich das Grundgehäuse 3, das Spannelement 4 sowie das Halteelement 5 können aus den unterschiedlichsten Werkstoffen sowie mit den verschiedensten Fertigungsverfahren hergestellt werden. Als Werkstoffe können die unterschiedlichsten Kunststoffe, metallische Werkstoffe sowie deren Legierungen bzw. auch in beliebigen Kombinationen untereinander Anwendung finden. Weiters können diese Bauteile als Drehteil und/oder Spritzteil und/oder Gussteil hergestellt werden.

Die Ausführungsbeispiele zeigen mögliche Ausführungsvarianten des Anschlussstücks bzw. die das Anschlussstück bildenden einzelnen Bauteile, wobei an dieser Stelle bemerkt sei, dass die Erfindung nicht auf die speziell dargestellten Ausführungsvarianten derselben eingeschränkt ist.

Der Ordnung halber sei abschließend darauf hingewiesen, dass zum besseren Verständnis des Aufbaus des Anschlussstücks dieses bzw. deren Bestandteile teilweise unmaßstäblich und/oder vergrößert und/oder verkleinert dargestellt wurden.

### Bezugszeichenaufstellung

- 1: Anschlussstück
- 2: Gegenstand
- 3: Grundgehäuse
- 4: Spannelement
- 5: Halteelement
- 6: Dichtelement
- 7: Längsachse
- 8: Endbereich
- 9: Endbereich
- 10: Aufnahmekammer
- 11: Querschnitt
- 12: Querschnitt
- 13: Oberfläche
- 14: Rastelement
- 15: Einschubrichtung
- 16: Oberflächenabschnitt
- 17: Oberflächenabschnitt
- 18: Oberflächenabschnitt
- 19: Positionierelement
- 20: Oberfläche
- 21: Oberflächenbereich
- 22: Oberflächenbereich
- 23: Abschnitt
- 24: Abschnitt
- 25: Abschnitt
- 26: Übergangsfläche
- 27: Übergangsfläche
- 28: Abstützfläche
- 29: Ebene
- 30: Anschlag
- 31: Ansatz
- 32: Distanz
- 33: Vorsprung
- 34: Stützfläche
- 35: Stützfläche

- 36: Stirnfläche
- 37: Stirnfläche
- 38: Aufnahmeraum
- 39: Aufnahmeraum
- 40: Ansatzstück
- 41: Schenkel
- 42: Schenkel
- 43: Distanzelement
- 44: Stützelement
- 45: Grundkörper
- 46: Dichtbereich
- 47: Ebene
- 48: Oberflächenbereich
- 49: Übergangsfläche
- 50: Ausnehmung

## Patentansprüche

1. Anschlussstück (1) für eine klemmende Verbindung mit einem Ende eines runden, insbesondere rohrförmigen, Gegenstandes (2), das Anschlussstück (1) umfasst:
- ein hülsenförmiges Grundgehäuse (3), das zumindest eine Aufnahmekammer (10) umgrenzt und eine Längsachse (7) aufweist,
- ein Spannelement (4), welches gegenüber dem Grundgehäuse (3) relativ dazu im Zusammenwirken eines gegenseitigen formschlüssigen Eingriffs in Richtung der Längs achse (7) verlagerbar ist und zumindest ein der Längsachse (7) zugewendeter innerer Oberflächenabschnitt (16 bis 18) sich kegelstumpfförmig verjüngend hin auf die vom Grundgehäuse (3) abgewendete Seite ausgebildet ist,
- zumindest ein Halteelement (5), welches im Bereich seines Umfangs eine Unterbrechungsstelle aufweist und zumindest ein von der Längsachse (7) abgewendeter äußerer Oberflächenbereich (21, 22) zum Zusammenwirken mit dem inneren Oberflächenabschnitt (16 bis 18) des Spannelements (4) vorgesehen ist, sowie
- zumindest ein Dichtelement (6), welches innerhalb des Grundgehäuses (3) angeordnet ist,
und in einer Ausgangsstellung, bei welcher das Dichtelement (6), das Spannelement (4) sowie das Halteelement (5) in das Grundgehäuse (3) eingesetzt ist, ein lichter innerer Querschnitt des Halteelements (5) zumindest gleich oder größer ist als ein äußerer Querschnitt des einzusetzenden Gegenstandes (2), **dadurch gekennzeichnet, dass** das Spannelement (4) in einer Einschubrichtung (15) des Gegenstandes (2) gesehen anschließend an den ersten inneren, sich kegelstumpfförmig erweiternden Oberflächenabschnitt (16) einen zweiten annähernd zylindrischen Oberflächenabschnitt (17) umfasst und zwischen diesen beiden Oberflächenabschnitten (16, 17) mindestens ein Positionierelement (19) ausgebildet ist, und dass das Halteelement (5) auf der dem Spannelement (4) zugewendeten Seite im Bereich einer äußeren Oberfläche (20) einen gegengleich zu dem ersten kegelstumpfförmig erweiternden Oberflächenabschnitt (16) und dem zweiten annähernd zylindrischen Oberflächenabschnitt (17) des Spannelements (4) ausgerichteten ersten annähernd zylindrischen und zweiten kegelstumpfförmigen Oberflächenbereich (21, 22) umfasst und in der Ausgangsstellung der annähernd zylindrische Oberflächenbereich (21) des Halteelements (5) zumindest bereichsweise am annähernd zylindrischen Oberflächenabschnitt (17) des Spannelements (4) anliegt und das Halteelement (5) mit dem Positionierelement (19) des Spannelements (4) zusammenwirkt.

2. Anschlussstück (1) nach Anspruch 1, **dadurch gekennzeichnet, dass** die Aufnahmekammer (10) des Grundgehäuses (3) in Einschubrichtung (16) des Gegenstandes (2) sowie im Axialschnitt gesehen ausgehend von einem ersten Endbereich (8) hin in Richtung auf einen zweiten Endbereich (9) stufenförmig verjüngend ausgebildet ist.

3. Anschlussstück (1) nach Anspruch 2, **dadurch gekennzeichnet, dass** die stufenförmigen Abschnitte (23 bis 25) annähernd zylindrisch ausgebildet sind.

4. Anschlussstück (1) nach einem der vorhergehenden Ansprüche 2 oder 3, **dadurch gekennzeichnet, dass** in einem Übergangsbereich zwischen den stufenförmigen Abschnitten (23, 24; 24, 25) senkrecht zur Längsachse (7) ausgerichtete Übergangsflächen (26, 27) ausgebildet sind.

5. Anschlussstück (1) nach einem der vorhergehenden Ansprüche, **dadurch gekennzeichnet, dass** in der eingesetzten Position des Dichtelements (6) in das Grundgehäuse (3) eine lichte Weite desselben kleiner ist als eine Außenabmessung des in das Grundgehäuse (3) einzubringenden Gegenstandes (2).

6. Anschlussstück (1) nach einem der vorhergehenden Ansprüche, **dadurch gekennzeichnet, dass** das Dichtelement (6) im Bereich jenes stufenförmigen Abschnitts (24) angeordnet ist, der dem Abschnitt (23) zum gegenseitigen formschlüssigen Eingriff zwischen dem Grundgehäuse (3) und dem Spannelement (4) nachgeordnet ist.

7. Anschlussstück (1) nach einem der vorhergehenden Ansprüche, **dadurch gekennzeichnet, dass** dem Dichtelement (6) im Grundgehäuse (3) auf der vom Spannelement (4) abgewendeten Seite eine Abstützfläche (28) zugeordnet ist, welche zu einer senkrecht zur Längsachse (7) ausgerichteten Ebene (29) über den Umfang gesehen einen in senkrechter Richtung zur Ebene 29 unterschiedlichen Abstand aufweist.

8. Anschlussstück (1) nach einem der vorhergehenden Ansprüche, **dadurch gekennzeichnet, dass** im Grundgehäuse (3) in zumindest einem der Abschnitte (24, 25), der insbesondere dem Abschnitt (23) zum gegenseitigen formschlüssigen Eingriff zwischen dem Grundgehäuse (3) und dem Spannelement (4) nachgeordnet ist, zumindest eine nutförmige Vertiefung für das Dichtelement (6) angeordnet ist, und die Vertiefung bezüglich der senkrecht zur Längsachse (7) ausgerichteten Ebene (29) über den Umfang gesehen einen in senkrechter Richtung zur Ebene 29 unterschiedlichen Abstand aufweist.

9. Anschlussstück (1) nach Anspruch 7 oder 8, **dadurch gekennzeichnet, dass** die nutförinige Vertiefung und/oder die Abstützfläche (28) über den Umfang gesehen bezüglich der senkrecht zur Längsachse (7) ausgerichteten Ebene (29) wellenförmig ausgebildet ist.

10. Anschlussstück (1) nach einem der vorhergehenden Ansprüche, **dadurch gekennzeichnet, dass** das Dichtelement (6) durch einen O-Ring gebildet ist.

11. Anschlussstück (1) nach einem der Ansprüche 1 bis 6, **dadurch gekennzeichnet, dass** das Dichtelement (6) einen Grundkörper (45) und zumindest einen über den Umfang umlaufend ausgebildeten und zur Anlage am Gegenstand (2) vorgesehenen Dichtbereich (46) aufweist, wobei der Dichtbereich (46) in einer senkrecht zur Längsachse (7) ausgerichteten Ebene (47) über den Umfang gesehen einen unterschiedlichen Abstand aufweist.

12. Anschlussstück (1) nach Anspruch 11, **dadurch gekennzeichnet, dass** der Dichtbereich (46) über den Umfang gesehen bezüglich der senkrecht zur Längsachse (7) ausgerichteten Ebene (47) wellenförmig ausgebildet ist.

13. Anschlussstück (1) nach Anspruch 11 oder 12, **dadurch gekennzeichnet, dass** der Dichtbereich (46) im Axialschnitt wulstförmig ausgebildet ist.

14. Anschlussstück (1) nach Anspruch 11 oder 12, **dadurch gekennzeichnet, dass** der Dichtbereich (46) durch zumindest eine Dichtlippe gebildet ist.

15. Anschlussstück (1) nach einem der Ansprüche 11 bis 14, **dadurch gekennzeichnet, dass** der Dichtbereich (46) in Richtung auf die Längsachse (7) vorragend ausgebildet ist.

16. Anschlussstück (1) nach einem der Ansprüche 11 bis 15, **dadurch gekennzeichnet, dass** eine am Grundkörper (45) an der von der Längsachse (7) abgewendeten Seite angeordnete Fläche im Axialschnitt wellenförmig ausgebildet ist.

17. Anschlussstück (1) nach einem der vorhergehenden Ansprüche, **dadurch gekennzeichnet, dass** der dritte stufenförmige Abschnitt (25) im Grundgehäuse (3) einen lichten Querschnitt aufweist, der zumindest gleich oder größer dem äußeren Querschnitt des Gegenstandes (2) ist.

18. Anschlussstück (1) nach einem der vorhergehenden Ansprüche, **dadurch gekennzeichnet, dass** am Grundgehäuse (3) im Bereich des dritten stufenförmigen Abschnitts (25) an der von den vorhergehenden Abschnitten (23, 24) abgewendeten Seite zumindest ein in Richtung auf die Längsachse (7) vorragender Anschlag (30) für den Gegenstand (2) angeordnet ist.

19. Anschlussstück (1) nach einem der vorhergehenden Ansprüche, **dadurch gekennzeichnet, dass** das am Spannelement (4) angeordnete Positionierelement (19) durch zumindest eine in Richtung auf die Längsachse (7) und über den zweiten annähernd zylindrisch ausgebildeten Oberflächenabschnitt (17) vorspringende Schulter gebildet ist.

20. Anschlussstück (1) nach einem der vorhergehenden Ansprüche, **dadurch gekennzeichnet, dass** das Spannelement (4) anschließend an den zweiten annähernd zylindrisch ausgebildeten Oberflächenabschnitt (17) auf der vom Positionierelement (19) abgewendeten Seite einen dritten sich kegelförmig erweiternden Oberflächenabschnitt (18) aufweist.

21. Anschlussstück (1) nach einem der vorhergehenden Ansprüche, **dadurch gekennzeichnet, dass** der erste und dritte kegelstumpfförmige Oberflächenabschnitt (16, 18) des Spannelements (4) Teilflächen einer diese einhüllenden Kegelstumpfmantelfläche bilden.

22. Anschlussstück (1) nach einem der vorhergehenden Ansprüche, **dadurch gekennzeichnet, dass** dem ersten kegelstumpfförmig ausgebildeten Oberflächenabschnitt (16) des Spannelements (4) in Einschubrichtung (15) des Gegenstandes (2) gesehen ein Aufnahmeraum (38) vorgeordnet ist.

23. Anschlussstück (1) nach einem der vorhergehenden Ansprüche, **dadurch gekennzeichnet, dass** der gegenseitige formschlüssige Eingriff zwischen dem Spannelement (4) und dem Grundgehäuse (3) durch eine im Bereich des ersten stufenförmigen Abschnitts (23) angeordnete Gewindeanordnung gebildet ist.

24. Anschlussstück (1) nach einem der vorhergehenden Ansprüche, **dadurch gekennzeichnet, dass** das Spannelement (4) auf der von der Längsachse (7) abgewendeten Seite zumindest einen, insbesondere flanschförmig ausgebildeten, Ansatz (31) aufweist, der in der Ausgangsstellung in Richtung der Längsachse (7) gesehen in einer vorbestimmbaren Distanz (32), welche einem Kupplungsweg zwischen dem Grundgehäuse (3) und dem Spannelement (4) entspricht, vom Grundgehäuse (3) beabstandet ist.

25. Anschlussstück (1) nach Anspruch 24, **dadurch gekennzeichnet, dass** in einer ersten Kupplungsstellung zwischen dem Spannelement (4) und dem Gegenstand (2) der Ansatz (31) des Spannelements (4) am Grundgehäuse (3) abgestützt ist.

26. Anschlussstück (1) nach einem der vorhergehenden Ansprüche, **dadurch gekennzeichnet, dass** das Halteelement (5) hülsenförmig ausgebildet ist.

27. Anschlussstück (1) nach einem der vorhergehenden Ansprüche, **dadurch gekennzeichnet, dass** am Halteelement (5) zwischen dem ersten annähernd zylinderförmigen Oberflächenbereich (21) und dem zweiten kegelstumpfförmigen Oberflächenbereich (22) ein im Axialschnitt gesehen dritter Oberflächenbereich (48) ausgebildet ist, der gegenüber dem kegelstumpfförmigen Oberflächenbereich (22) eine in Richtung auf die Längsachse (7) gerichtete größerer Neigung aufweist.

28. Anschlussstück (1) nach Anspruch 27, **dadurch gekennzeichnet, dass** der dritte Oberflächenbereich (48) im Axialschnitt gesehen konvex gekrümmt ist.

29. Anschlussstück (1) nach einem der vorhergehenden Ansprüche, **dadurch gekennzeichnet, dass** der kegelstumpfförmige Oberflächenbereich (22) des Halteelements (5) in Richtung der Längsachse (7) größer ist als die Summe des ersten bis dritten Oberflächenabschnitts (16 bis 18) des Spannelements (4) in der gleichen Richtung.

30. Anschlussstück (1) nach einem der Ansprüche 1 bis 28, **dadurch gekennzeichnet, dass** der kegelstumpfförmige Oberflächenbereich (22) sowie der dritte Oberflächenbereich (48) des Halteelements (5) in Richtung der Längsachse (7) gleich ist der Länge des ersten kegelstumpfförmigen Oberflächenabschnitts (16) des Spannelements (4) in der gleichen Richtung.

31. Anschlussstück (1) nach einem der vorhergehenden Ansprüche, **dadurch gekennzeichnet, dass** das Halteelement (5) auf der von der Längsachse (7) abgewendeten Seite anschließend an den kegelstumpfförmigen Oberflächenbereich (22) zumindest einen diesen überragenden, insbesondere flanschförmig ausgebildeten, Vorsprung (33) aufweist.

32. Anschlussstück (1) nach Anspruch 31, **dadurch gekennzeichnet, dass** in der Ausgangsstellung der Vorsprung (33) an der im Übergangsbereich zwischen dem ersten und zweiten stufenförmigen Abschnitt (23, 24) der Aufnahmekammer (10) des Grundgehäuses (3) ausgebildeten Übergangsfläche (26) in axialer Richtung abgestützt ist.

33. Anschlussstück (1) nach Anspruch 31 oder 32, **dadurch gekennzeichnet, dass** der Vorsprung (33) an der von der Längsachse (7) abgewendeten Seite zumindest bereichsweise eine kegelstumpfförmig in Richtung auf das Spannelement (4) verjüngend ausgebildete Stützfläche (34) aufweist, wobei ein Kegelwinkel gleich zu dem ersten kegelstumpfförmigen Oberflächenbereich (22) ausgebildet ist.

34. Anschlussstück (1) nach einem der Ansprüche 31 bis 33, **dadurch gekennzeichnet, dass** am Vorsprung (33) an der von der Längsachse (7) abgewendeten sowie dem Spannelement (4) zugewendeten Seite im Axialschnitt gesehen eine Übergangsfläche (49) angeordnet ist, die gegenüber der kegelstumpfförmig verjüngend ausgebildeten Stützfläche (34) eine in Richtung auf die Längsachse (7) gerichtete größerer Neigung aufweist.

35. Anschlussstück (1) nach Anspruch 34, **dadurch gekennzeichnet, dass** die Übergangsfläche (49) im Axialschnitt gesehen konvex gekrümmt ist.

36. Anschlussstück (1) nach einem der vorhergehenden Ansprüche, **dadurch gekennzeichnet, dass** das Halteelement (5) mit einer in Richtung auf das Spannelements (4) gerichteten radialen Vorspannung in diesem gehalten ist.

37. Anschlussstück (1) nach einem der vorhergehenden Ansprüche, **dadurch gekennzeichnet, dass** das Halteelement (5) auf der vom Spannelement (4) abgewendeten Seite zumindest ein in Richtung auf das Dichtelement (6) vorragendes Ansatzstück (40) aufweist.

38. Anschlussstück (1) nach Anspruch 37, **dadurch gekennzeichnet, dass** das Ansatzstück (40) im Axialschnitt gesehen L-förmig ausgebildet ist.

39. Anschlussstück (1) nach Anspruch 38, **dadurch gekennzeichnet, dass** ein erster Schenkel (41) des L-förmig ausgebildeten Ansatzstücks (40) parallel zur Längsachse (7) und ein weiterer Schenkel (42) auf die von der Längsachse (7)abgewendete Seite ragend ausgerichtet ist.

40. Anschlussstück (1) nach einem der Ansprüche 37 bis 39, **dadurch gekennzeichnet, dass** das Ansatzstück (40) in der Ausgangsstellung in radialer Richtung am Grundgehäuse (3) abgestützt ist.

41. Anschlussstück (1) nach einem der vorhergehenden Ansprüche, **dadurch gekennzeichnet, dass** zwischen den Halteelement (5) und dem Dichtelement (6) zumindest ein zusätzliches Distanzelement (43) angeordnet ist.

42. Anschlussstück (1) nach einem der vorhergehenden Ansprüche, **dadurch gekennzeichnet, dass** am Halteelement (5) auf einer der Längsachse (7) zugewendeten inneren Oberfläche (13) zumindest ein über diese in Richtung auf die Längsachse (7) vorragendes Rastelement (14) angeordnet ist.

43. Anschlussstück (1) nach Anspruch 42, **dadurch gekennzeichnet, dass** über den Umfang gesehen mehrere Rastelemente (14) angeordnet sind.

44. Anschlussstück (1) nach Anspruch 42 oder 43, **dadurch gekennzeichnet, dass** in Richtung der Längsachse (7) gesehen mehrere Rastelemente (14) hintereinander sowie voneinander distanziert angeordnet sind.

45. Anschlussstück (1) nach einem der Ansprüche 42 bis 44, **dadurch gekennzeichnet, dass** die in Richtung der Längsachse (7) gesehen unmittelbar hintereinander angeordneten Rastelemente (14) in Umfangsrichtung gegeneinander versetzt angeordnet sind.

46. Anschlussstück (1) nach einem der vorhergehenden Ansprüche, **dadurch gekennzeichnet, dass** in der ersten Kupplungsstellung der das Halteelement (5) überragende Vorsprung (33) mit seiner kegelstumpfförmig verjüngend ausgebildeten Stützfläche (34) an einer am Spannelement (4) gegengleich dazu ausgebildeten weiteren Stützfläche (35) anliegt.

47. Anschlussstück (1) nach einem der vorhergehenden Ansprüche, **dadurch gekennzeichnet, dass** in der ersten Kupplungsstellung das Halteelement (5) mit seinem Übergangsbereich zwischen dem ersten annähernd zylindrisch ausgebildeten und dem zweiten kegelstumpfförmig ausgebildeten Oberflächenbereich (21, 22) in einem am Spannelement (4) ausgebildeten Übergangsbereich zwischen dem ersten kegelstumpfförmig ausgebildeten Oberflächenabschnitt (16) und dem Aufnahmeraum (38) angeordnet ist.

48. Anschlussstück (1) nach einem der vorhergehenden Ansprüche, **dadurch gekennzeichnet, dass** in der ersten Kupplungsstellung zwischen dem Vorsprung (33) des Halteelements (5) und dem Spannelement (4) zumindest ein weiterer sich in axialer Richtung erstreckender Aufnahmeraum (39) ausgebildet ist.

49. Anschlussstück (1) nach einem der vorhergehenden Ansprüche, **dadurch gekennzeichnet, dass** in der ersten Kupplungsstellung zwischen einem dem Spannelement (4) zugewendeten Ende des Halteelements (5) und dem Spannelement (4) der in axialer Richtung erstreckende Aufnahmeraum (38) ausgebildet ist.

50. Anschlussstück (1) nach einem der vorhergehenden Ansprüche, **dadurch gekennzeichnet, dass** in einer zweiten Kupplungsstellung das Halteelement (5) gegenüber der ersten Kupplungsstellung in axialer Richtung hin zum Spannelement (4) verstellt ist und der Vorsprung (33) des Halteelements (5) in axialer Richtung am Spannelement (4) abgestützt ist.

## Claims

1. Connector piece (1) for a clamping connection to one end of a round, in particular tubular, object (2), the connector piece (1) comprising:
- a sleeve-shaped base housing (3), which encloses at least one receiving chamber (10) and has a longitudinal axis (7),
- a tensioning element (4), which can be displaced relative to the base housing (3), in cooperation with a mutual positive engagement in the direction of the longitudinal axis (7), and at least one inner surface portion (16 to 18) facing the longitudinal axis (7) is configured tapering in a truncated cone shape to the side remote from the base housing (3),
- at least one holding element (5), which has an interruption point in the region of its periphery and at least one outer surface region (21, 22) remote from the longitudinal axis (7), is provided to cooperate with the inner surface portion (16 to 18) of the tensioning element (4), as well as
- at least one sealing element (6), which is arranged inside the base housing (3),
and in a starting position, in which the sealing element (6), the tensioning element (4) as well as the holding element (5) are inserted into the basic housing, a clear inner cross-section of the holding element (5) is at least equal to or greater than an outer cross-section of the object (2) to be inserted, **characterised in that** the tensioning element (4), viewed in an insertion direction (15), of the object (2) adjoining the first inner surface portion (16) widening in a truncated cone-shape, comprises a second virtually cylindrical surface portion (17) and at least one positioning element (19) is configured between these two surface portions (16, 17) and **in that** the holding element (5), on the side facing the tensioning element (4) in the region of an outer surface (20), comprises a first virtually cylindrical and second truncated cone-shaped surface region (21, 22) oriented in a mirror-inverted manner with respect to the first surface portion (16) widening in a truncated cone shape and the second virtually cylindrical surface portion (17) of the tensioning element (4) and, in the starting position of the virtually cylindrical surface region (21) of the holding element (5), rests, at least in regions, on the virtually cylindrical surface portion (17) of the tensioning element (4), and the holding element (5) cooperates with the positioning element (19) of the tensioning element (4).

2. Connector piece (1) according to claim 1, **characterised in that** the receiving chamber (10) of the base housing (3), viewed in the insertion direction (16) of the object (2) and in axial section, proceeding from a first end region (8), is configured tapering in a step-shape in the direction of a second end region (9).

3. Connector piece (1) according to claim 2, **characterised in that** the step-shaped portions (23 to 25) are virtually cylindrical.

4. Connector piece (1) according to either of the preceding claims 2 or 3, **characterised in that** transition faces (26, 27) oriented perpendicular to the longitudinal axis (7) are configured in a transition region between the step-shaped portions (23, 24; 24, 25).

5. Connector piece (1) according to any one of the preceding claims, **characterised in that** when the sealing element (6) is in the position inserted into the base housing (3), a clear width thereof is smaller than an external dimension of the object (2) to be introduced into the base housing (3).

6. Connector piece (1) according to any one of the preceding claims, **characterised in that** the sealing element (6) is arranged in the region of the step-shaped portion (24) which is arranged downstream of the portion (23) for mutual positive engagement between the base housing (3) and the tensioning element (4).

7. Connector piece (1) according to any one of the preceding claims, **characterised in that** a support face (28) is associated with the sealing element (6) in the base housing (3) on the side remote from the tensioning element (4) and has a different spacing in the perpendicular direction to the plane (29) from a plane (29) oriented perpendicular to the longitudinal axis (7), viewed over the periphery.

8. Connector piece (1) according to any one of the preceding claims, **characterised in that** at least one groove-shaped recess for the sealing element (6) is arranged in the base housing (3) in at least one of the portions (24, 25) which is, in particular, arranged downstream of the portion (23) for mutual positive engagement between the base housing (3) and the tensioning element (4), and the recess with respect to the plane (29) oriented perpendicular to the longitudinal axis (7), viewed over the periphery, has a different spacing in the perpendicular direction to the plane (29).

9. Connector piece (1) according to claim 7 or 8, **characterised in that** the groove-shaped recess and/or the support face (28), viewed over the periphery, is configured in an undulating shape with respect to the plane (29) oriented perpendicular to the longitudinal axis (7).

10. Connector piece (1) according to any one of the preceding claims, **characterised in that** the sealing element (6) is formed by an O-ring.

11. Connector piece (1) according to any one of claims 1 to 6, **characterised in that** the sealing element (6) has a base body (45) and at least one sealing region (46) formed running over the periphery and provided to rest on the object (2), the sealing region (46), in a plane (47) oriented perpendicular to the longitudinal axis (7), viewed over the periphery, having a different spacing.

12. Connector piece (1) according to claim 11, **characterised in that** the sealing region (46), viewed over the periphery, has an undulating shape with regard to the plane (47) oriented perpendicular to the longitudinal axis (7).

13. Connector piece (1) according to claim 11 or 12, **characterised in that** the sealing region (46) is bead-shaped in axial section.

14. Connector piece (1) according to claim 11 or 12, **characterised in that** the sealing region (46) is formed by at least one sealing lip.

15. Connector piece (1) according to any one of claims 11 to 14, **characterised in that** the sealing region (46) projects in the direction of the longitudinal axis (7).

16. Connector piece (1) according to any one of claims 11 to 15, **characterised in that** a face arranged on the base body (45) on the side remote from the longitudinal axis (7) has an undulating shape in axial section.

17. Connector piece (1) according to any one of the preceding claims, **characterised in that** the third step-shaped portion (25) in the base housing (3) has a clear cross-section which is at least equal to or greater than the outer cross-section of the object (2).

18. Connector piece (1) according to any one of the preceding claims, **characterised in that** at least one stop (30) projecting in the direction of the longitudinal axis (7) for the object (2) is arranged on the base housing (3) in the region of the third step-shaped portion (25) on the side remote from the previous portions (23, 24).

19. Connector piece (1) according to any one of the preceding claims, **characterised in that** the positioning element (19) arranged on the tensioning element (4) is formed by at least one shoulder projecting in the direction of the longitudinal axis (7) and over the second virtually cylindrical surface portion (17).

20. Connector piece (1) according to any one of the preceding claims, **characterised in that** the tensioning element (4) adjoining the second virtually cylindrical surface portion (17), on the side remote from the positioning element (19), has a third surface portion (18) widening in a truncated cone shape.

21. Connector piece (1) according to any one of the preceding claims, **characterised in that** the first and third truncated cone-shaped surface portion (16, 18) of the tensioning element (4) form part faces of a truncated cone-shaped surface surrounding the latter.

22. Connector piece (1) according to any one of the preceding claims, **characterised in that** a receiving space (38) is arranged upstream of the first truncated cone-shaped surface portion (16) of the tensioning element (4), viewed in the insertion direction (15) of the object (2).

23. Connector piece (1) according to any one of the preceding claims, **characterised in that** the mutual positive engagement between the tensioning element (4) and the base housing (3) is formed by a threaded arrangement arranged in the region of the first step-shaped portion (23).

24. Connector piece (1) according to any one of the preceding claims, **characterised in that** the tensioning element (4) on the side remote from the longitudinal axis (7) has at least one, in particular flange-shaped extension (31), which, in the starting position, viewed in the direction of the longitudinal axis (7), at a predeterminable distance (32), which corresponds to a coupling path between the base housing (3) and the tensioning element (4), is spaced apart from the base housing (3).

25. Connector piece (1) according to claim 24, **characterised in that** the extension (31) of the tensioning element (4) is supported on the base housing (3) in a first coupling position between the tensioning element (4) and the object (2).

26. Connector piece (1) according to any one of the preceding claims, **characterised in that** the holding element (5) is sleeve-shaped.

27. Connector piece (1) according to any one of the preceding claims, **characterised in that** formed on the holding element (5) between the first virtually cylindrical surface region (21) and the second truncated cone-shaped surface region (22) is, viewed in axial section, a third surface region (48) which with respect to the truncated cone-shaped surface region (22), has a greater incline oriented in the direction of the longitudinal axis (7).

28. Connector piece (1) according to claim 27, **characterised in that** the third surface region (48) is convexly curved, viewed in axial section.

29. Connector piece (1) according to any one of the preceding claims, **characterised in that** the truncated cone-shaped surface region (22) of the holding element (5) in the direction of the longitudinal axis (7) is greater than the sum of the first to third surface portion (16 to 18) of the tensioning element (4) in the same direction.

30. Connector piece (1) according to any one of claims 1 to 28, **characterised in that** the truncated cone-shaped surface region (22) and the third surface region (48) of the holding element (5) in the direction of the longitudinal axis (7) are equal to the length of the first truncated cone-shaped surface portion (16) of the tensioning element (4) in the same direction.

31. Connector piece (1) according to any one of the preceding claims, **characterised in that** the holding element (5) on the side remote from the longitudinal axis (7) adjoining the truncated cone-shaped surface region (22) has at least one projection (33) projecting over the latter and being, in particular, flange-shaped.

32. Connector piece (1) according to claim 31, **characterised in that** in the starting position, the projection (33) is supported on the transition face (26) formed in the transition region between the first and second step-shaped portion (23, 24) of the receiving chamber (10) of the base housing (3) in the axial direction.

33. Connector piece (1) according to claim 31 or 32, **characterised in that** the projection (33) on the side remote from the longitudinal axis (7) has, at least in regions, a support face (34) tapering in a truncated cone shape in the direction of the tensioning element (4), a cone angle being configured equal to the first truncated cone-shaped surface region (22).

34. Connector piece (1) according to any one of claims 31 to 33, **characterised in that** a transition face (49) is arranged on the projection (33) on the side remote from the longitudinal axis (7) and facing the tensioning element (4), viewed in axial section, and has a larger incline oriented in the direction of the longitudinal axis (7) in relation to the support face (34) tapering in a truncated cone shape.

35. Connector piece (1) according to claim 34, **characterised in that** the transition face (49) is convexly curved, viewed in axial section.

36. Connector piece (1) according to any one of the preceding claims, **characterised in that** the holding element (5) is held with a radial preload oriented in the direction of the tensioning element (4) in said tensioning element.

37. Connector piece (1) according to any one of the preceding claims, **characterised in that** the holding element (5), on the side remote from the tensioning element (4), has at least one extension piece (40) projecting in the direction of the sealing element (6).

38. Connector piece (1) according to claim 37, **characterised in that** the extension piece (40) is L-shaped in axial section.

39. Connector piece (1) according to claim 38, **characterised in that** a first side (41) of the L-shaped extension piece (40) is oriented parallel to the longitudinal axis (7) and a further side (42) is oriented projecting onto the side remote from the longitudinal axis (7).

40. Connector piece (1) according to any one of claims 37 to 39, **characterised in that** the extension piece (40), in the starting position, is supported in the radial direction on the base housing (3).

41. Connector piece (1) according to any one of the preceding claims, **characterised in that** at least one additional spacer element (43) is arranged between the holding element (5) and the sealing element (6).

42. Connector piece (1) according to any one of the preceding claims, **characterised in that** arranged on the holding element (5) on an inner surface (13) facing the longitudinal axis (7) is at least one latching element (14) projecting over the latter in the direction of the longitudinal axis (7).

43. Connector piece (1) according to claim 42, **characterised in that** a plurality of latching elements (14) are arranged, viewed over the periphery.

44. Connector piece (1) according to claim 42 or 43, **characterised in that** a plurality of latching elements (14) are arranged one behind the other and distanced from one another, viewed in the direction of the longitudinal axis (7).

45. Connector piece (1) according to any one of claims 42 to 44, **characterised in that** the latching elements (14) arranged directly one behind the other, viewed in the direction of the longitudinal axis (7), are arranged offset with respect to one another in the peripheral direction.

46. Connector piece (1) according to any one of the preceding claims, **characterised in that**, in the first coupling position, the projection (33) projecting over the holding element (5) rests with its support face (34) tapering in a truncated cone shape on a further support face (35) configured on the tensioning element (4), in a mirror-inverted manner thereto.

47. Connector piece (1) according to any one of the preceding claims, **characterised in that**, in the first coupling position, the holding element (5) is arranged with its transition region between the first virtually cylindrical and the second truncated cone-shaped surface region (21, 22) in a transition region configured on the tensioning element (4) between the first truncated cone-shaped surface portion (16) and the receiving space (38).

48. Connector piece (1) according to any one of the preceding claims, **characterised in that**, in the first coupling position, at least one further receiving space (39) extending in the axial direction is configured between the projection (33) of the holding element (5) and the tensioning element (4).

49. Connector piece (1) according to any one of the preceding claims, **characterised in that** the receiving space (38) extending in the axial direction is configured in the first coupling position between an end of the holding element (5) facing the tensioning element (4) and the tensioning element (4).

50. Connector piece (1) according to any one of the preceding claims, **characterised in that** in a second coupling position, the holding element (5) is adjusted with respect to the first coupling position in the axial direction toward the tensioning element (4) and the projection (33) of the holding element (5) is supported in the axial direction on the tensioning element (4).

## Revendications

1. Pièce de raccordement (1) pour un assemblage par serrage avec une extrémité d'un objet (2) circulaire, en particulier tubulaire, ladite pièce de raccordement (1) comportant:
- un boîtier de base (3) en forme de manchon, qui délimite au moins une chambre de réception (10) et comporte un axe longitudinal (7),
- un élément de serrage (4), qui est apte à être déplacé par rapport au boîtier de base (3) en corrélation avec un engagement réciproque par conjugaison de forme dans le sens de l'axe longitudinal (7), et il est formé au moins une partie de surface intérieure (16 à 18), orientée vers l'axe longitudinal (7), se rétrécissant sous forme tronconique vers le côté opposé au boîtier de base (3),
- au moins un élément de retenue (5) qui, dans la zone de son pourtour, comporte une zone d'interruption et il est prévu au moins une partie de surface extérieure (21, 22), opposée à l'axe longitudinal (7) et destinée à coopérer avec la partie de surface intérieure (16 à 18) de l'élément de serrage (4), et
- au moins un élément d'étanchéité (6) qui est disposé à l'intérieur du boîtier de base (3),
et dans une position de départ, dans laquelle l'élément d'étanchéité (6), l'élément de serrage (4) et l'élément de retenue (5) sont insérés dans le boîtier de base (3), une section intérieure libre de l'élément de retenue (5) est au moins égale ou supérieure à une section extérieure de l'objet (2) à introduire, **caractérisée en ce que** l'élément de serrage (4) comporte une deuxième partie de surface (17) sensiblement cylindrique qui, par référence à un sens d'introduction (15) de l'objet (2), est adjacente à la première partie de surface intérieure (16) s'élargissant sous forme tronconique, et au moins un élément de positionnement (19) est formé entre ces deux parties de surface (16, 17), et **en ce que** l'élément de retenue (5), sur le côté orienté vers l'élément de serrage (4), dans la zone d'une surface extérieure (20), comporte une première zone de surface (21) sensiblement cylindrique et une deuxième zone de surface (22) sensiblement tronconique, qui sont diamétralement opposées à la première partie de surface (16) s'élargissant sous forme tronconique et à la deuxième partie de surface (17) sensiblement cylindrique de l'élément de serrage (4), et, dans la position de départ, la zone de surface (21) sensiblement cylindrique de l'élément de retenue (5) est en appui au moins par zones contre la partie de surface (17) sensiblement cylindrique de l'élément de serrage (4), et l'élément de retenue (5) coopère avec l'élément de positionnement (19) de l'élément de serrage (4).

2. Pièce de raccordement (1) selon la revendication 1, **caractérisée en ce que** la chambre de réception (10) du boîtier de base (3) est réalisée, dans le sens d'introduction (16) de l'objet (2) et par référence à une coupe axiale, en se rétrécissant par gradins à partir d'une première zone d'extrémité (8) vers une deuxième zone d'extrémité (9).

3. Pièce de raccordement (1) selon la revendication 2, **caractérisée en ce que** les parties à gradins (23 à 25) sont réalisées avec une forme sensiblement cylindrique.

4. Pièce de raccordement (1) selon une des revendications précédentes 2 ou 3, **caractérisée en ce que** dans la zone de transition entre les parties à gradins (23, 24; 24, 25) sont réalisées des surfaces de transition (26, 27) orientées perpendiculairement à l'axe longitudinal (7).

5. Pièce de raccordement (1) selon l'une quelconque des revendications précédentes, **caractérisée en ce que**, dans la position insérée de l'élément d'étanchéité (6) dans le boîtier de base (3), une largeur intérieure de celui-ci est inférieure à une dimension extérieure de l'objet (2) à introduire dans le boîtier de base (3).

6. Pièce de raccordement (1) selon l'une quelconque des revendications précédentes, **caractérisée en ce que** l'élément d'étanchéité (6) est agencé dans la zone de la partie à gradins (24) qui est disposée en aval de la partie (23) destinée à l'engagement réciproque par conjugaison de forme entre le boîtier de base (3) et l'élément de serrage (4).

7. Pièce de raccordement (1) selon l'une quelconque des revendications précédentes, **caractérisée en ce qu'**à l'élément d'étanchéité (6) dans le boîtier de base (3), sur le côté opposé à l'élément de serrage (4), est associée une surface d'appui (28) qui comporte, par rapport à un plan (29) orienté perpendiculairement à l'axe longitudinal (7) par référence au pourtour, une distance différente dans la direction perpendiculaire au plan (29).

8. Pièce de raccordement (1) selon l'une quelconque des revendications précédentes, **caractérisée en ce que** dans le boîtier de base (3), dans au moins une des parties (24, 25), laquelle est disposée en aval de la partie (23) destinée à l'engagement réciproque par conjugaison de forme entre le boîtier de base (3) et l'élément de serrage (4), est ménagé au moins un creux en forme de rainure pour l'élément d'étanchéité (6), et ledit creux comporte, par rapport à un plan (29) orienté perpendiculairement à l'axe longitudinal (7) par référence au pourtour, une distance différente dans la direction perpendiculaire au plan (29).

9. Pièce de raccordement (1) selon la revendication 7 ou 8, **caractérisée en ce que** le creux en forme de rainure et/ou la surface d'appui (28) sont réalisés sur tout le pourtour avec une forme ondulée par rapport au plan (29) orienté perpendiculairement à l'axe longitudinal (7).

10. Pièce de raccordement (1) selon l'une quelconque des revendications précédentes, **caractérisée en ce que** l'élément d'étanchéité (6) est formé par un joint torique.

11. Pièce de raccordement (1) selon l'une quelconque des revendications 1 à 6, **caractérisée en ce que** l'élément d'étanchéité (6) comporte un corps de base (45) et au moins une zone d'étanchéité (46) s'étendant sur tout le pourtour et prévue pour venir en appui contre l'objet (2), ladite zone d'étanchéité (46) comportant dans un plan (47) orienté perpendiculairement à l'axe longitudinal (7) une distance différente sur tout le pourtour.

12. Pièce de raccordement (1) selon la revendication 11, **caractérisée en ce que** la zone d'étanchéité (46) est réalisée sur tout le pourtour avec une forme ondulée par rapport au plan (47) orienté perpendiculairement à l'axe longitudinal (7).

13. Pièce de raccordement (1) selon la revendication 11 ou 12, **caractérisée en ce que** la zone d'étanchéité (46) est en forme de bourrelet sur une coupe axiale.

14. Pièce de raccordement (1) selon la revendication 11 ou 12, **caractérisée en ce que** la zone d'étanchéité (46) est formée par au moins une lèvre d'étanchéité.

15. Pièce de raccordement (1) selon l'une quelconque des revendications 11 à 14, **caractérisée en ce que** la zone d'étanchéité (46) est réalisée en s'avançant en saillie vers l'axe longitudinal (7).

16. Pièce de raccordement (1) selon l'une quelconque des revendications 11 à 15, **caractérisée en ce qu'**une surface, disposée sur le corps de base (45) sur le côté opposé à l'axe longitudinal (7), est réalisée avec une forme ondulée par référence à une coupe axiale.

17. Pièce de raccordement (1) selon l'une quelconque des revendications précédentes, **caractérisée en ce que** la troisième partie à gradins (25) dans le boîtier de base (3) a une section intérieure qui est au moins égale ou supérieure à la section extérieure de l'objet (2).

18. Pièce de raccordement (1) selon l'une quelconque des revendications précédentes, **caractérisée en ce que** sur le boîtier de base (3), dans la zone de la troisième partie à gradins (25), sur le côté opposé aux parties (23, 24) précédentes, est disposée au moins une butée (30) pour l'objet (2), laquelle s'avance en saillie vers l'axe longitudinal (7).

19. Pièce de raccordement (1) selon l'une quelconque des revendications précédentes, **caractérisée en ce que** l'élément de positionnement (19), disposé sur l'élément de serrage (4), est formé par au moins un épaulement s'avançant en saillie vers l'axe longitudinal (7) et au-delà de la partie de surface (17) sensiblement cylindrique.

20. Pièce de raccordement (1) selon l'une quelconque des revendications précédentes, **caractérisée en ce que** l'élément de serrage (4), dans le prolongement de la deuxième partie de surface (17) sensiblement cylindrique, comporte sur le côté opposé à l'élément de positionnement (19) une troisième partie de surface (18) s'élargissant sous forme tronconique.

21. Pièce de raccordement (1) selon l'une quelconque des revendications précédentes, **caractérisée en ce que** la première et la troisième partie de surface (16, 18) tronconiques de l'élément de serrage (4) forment des surfaces partielles d'une paroi latérale tronconique enveloppant celles-ci.

22. Pièce de raccordement (1) selon l'une quelconque des revendications précédentes, **caractérisée en ce qu'**un logement (38) est agencé en amont, par référence au sens d'introduction (15) de l'objet (2), de la première partie de surface (16) tronconique de l'élément de serrage (4).

23. Pièce de raccordement (1) selon l'une quelconque des revendications précédentes, **caractérisée en ce que** l'engagement réciproque par conjugaison de forme entre l'élément de serrage (4) et le boîtier de base (3) est formé par un système à filetage disposé dans la zone de la première partie à gradins (23).

24. Pièce de raccordement (1) selon l'une quelconque des revendications précédentes, **caractérisée en ce que** l'élément de serrage (4), sur le côté opposé à l'axe longitudinal (7), comporte au moins un décrochement (31) en forme de collet qui, dans la position de départ, est écarté du boîtier de base (3), dans le sens de l'axe longitudinal (7), selon une distance (32) prédéfinissable qui correspond à un trajet de couplage entre le boîtier de base (3) et l'élément de serrage (4).

25. Pièce de raccordement (1) selon la revendication 24, **caractérisée en ce que**, dans une première position de couplage entre l'élément de serrage (4) et l'objet (2), le décrochement (31) de l'élément de serrage (4) est en appui contre le boîtier de base (3).

26. Pièce de raccordement (1) selon l'une quelconque des revendications précédentes, **caractérisée en ce que** l'élément de retenue (5) est réalisé en forme de douille.

27. Pièce de raccordement (1) selon l'une quelconque des revendications précédentes, **caractérisée en ce que** sur l'élément de retenue (5), entre la première zone de surface (21) sensiblement cylindrique et la deuxième zone de surface (22) tronconique, est réalisée, par référence à une coupe axiale, une troisième zone de surface (48) qui, par rapport à la zone de surface (22) tronconique, présente une inclinaison plus grande dans la direction de l'axe longitudinal (7).

28. Pièce de raccordement (1) selon la revendication 27, **caractérisée en ce que** la troisième zone de surface (48) a une courbure convexe par référence à la coupe axiale.

29. Pièce de raccordement (1) selon l'une quelconque des revendications précédentes, **caractérisée en ce que** la zone de surface (22) tronconique de l'élément de retenue (5) est plus grande dans la direction de l'axe longitudinal (7) que la somme de la première à la troisième partie de surface (16 à 18) de l'élément de serrage (4) dans la même direction.

30. Pièce de raccordement (1) selon l'une quelconque des revendications 1 à 28, **caractérisée en ce que** la zone de surface (22) tronconique, ainsi que la troisième zone de surface (48) de l'élément de retenue (5) ont, dans la direction de l'axe longitudinal (7), une dimension égale à la longueur de la première partie de surface (16) tronconique de l'élément de serrage (4) dans la même direction.

31. Pièce de raccordement (1) selon l'une quelconque des revendications précédentes, **caractérisée en ce que** l'élément de retenue (5), sur le côté opposé à l'axe longitudinal (7), comporte dans le prolongement de la zone de surface (22) tronconique au moins une saillie (33) s'avançant au-delà de celle-ci et réalisée notamment en forme de collet.

32. Pièce de raccordement (1) selon la revendication 31, **caractérisée en ce que**, dans la position de départ, la saillie (33) prend appui dans la direction axiale contre la surface de transition (26), réalisée dans la zone de transition entre la première et la deuxième partie à gradins (23, 24) de la chambre de réception (10) du boîtier de base (3).

33. Pièce de raccordement (1) selon la revendication 31 ou 32, **caractérisée en ce que** la saillie (33) sur le côté opposé à l'axe longitudinal (7) comporte au moins par zones une surface d'appui (34) réalisée en se rétrécissant sous forme tronconique vers l'élément de serrage (4), un angle de cône étant réalisé de manière identique à la première zone de surface (22) tronconique.

34. Pièce de raccordement (1) selon l'une quelconque des revendications 31 à 33, **caractérisée en ce que** sur la saillie (33), sur le côté opposé à l'axe longitudinal (7) et orienté vers l'élément de serrage (4) par référence à une coupe axiale, est disposée une surface de transition (49) qui, par rapport à la surface d'appui (34) se rétrécissant sous forme tronconique, possède une inclinaison plus grande orientée vers l'axe longitudinal (7).

35. Pièce de raccordement (1) selon la revendication 34, **caractérisée en ce que** la surface de transition (49) possède une courbure convexe par référence à une coupe axiale.

36. Pièce de raccordement (1) selon l'une quelconque des revendications précédentes, **caractérisée en ce que** l'élément de retenue (5) est maintenu dans l'élément de serrage (4) avec une précontrainte radiale dirigée vers ledit élément de serrage.

37. Pièce de raccordement (1) selon l'une quelconque des revendications précédentes, **caractérisée en ce que** l'élément de retenue (5), sur le côté opposé à l'élément de serrage (4), comporte au moins un prolongement (40) s'avançant en saillie vers l'élément d'étanchéité (6).

38. Pièce de raccordement (1) selon la revendication 37, **caractérisée en ce que** le prolongement (40) est réalisé en forme de L par référence à une coupe axiale.

39. Pièce de raccordement (1) selon la revendication 38, **caractérisée en ce qu'**une première branche (41) du prolongement (40) en forme de L est parallèle à l'axe longitudinal (7) et une autre branche (42) est dirigée en s'avançant vers le côté opposé à l'axe longitudinal (7).

40. Pièce de raccordement (1) selon l'une quelconque des revendications 37 à 39, **caractérisée en ce que**, dans la position de départ, le prolongement (40) prend appui dans la direction radiale contre le boîtier de base (3).

41. Pièce de raccordement (1) selon l'une quelconque des revendications précédentes, **caractérisée en ce qu'**au moins un élément d'écartement (43) supplémentaire est agencé entre l'élément de retenue (5) et l'élément d'étanchéité (6).

42. Pièce de raccordement (1) selon l'une quelconque des revendications précédentes, **caractérisée en ce que** sur l'élément de retenue (5), sur une surface intérieure (13) orientée vers l'axe longitudinal (7), est agencé au moins un élément de blocage (14) s'avançant vers l'axe longitudinal (7) en saillie au-delà de ladite surface intérieure.

43. Pièce de raccordement (1) selon la revendication 42, **caractérisée en ce que** plusieurs éléments de blocage (14) sont disposés sur tout le pourtour.

44. Pièce de raccordement (1) selon la revendication 42 ou 43, **caractérisée en ce que**, par référence à la direction de l'axe longitudinal (7), plusieurs éléments de blocage (14) sont disposés les uns à la suite des autres et à distance les uns des autres.

45. Pièce de raccordement (1) selon l'une quelconque des revendications 42 à 44, **caractérisée en ce que** les éléments de blocage (14), disposés directement les uns à la suite des autres par référence à la direction de l'axe longitudinal (7), sont décalés les uns par rapport aux autres dans la direction du pourtour.

46. Pièce de raccordement (1) selon l'une quelconque des revendications précédentes, **caractérisée en ce que** dans la première position de couplage, la saillie (33) s'avançant au-delà de l'élément de retenue (5) prend appui avec sa surface d'appui (34), rétrécie sous forme tronconique, contre une autre surface d'appui (35), réalisée sur l'élément de serrage (4) en étant diamétralement opposée à celui-ci.

47. Pièce de raccordement (1) selon l'une quelconque des revendications précédentes, **caractérisée en ce que**, dans la première position de couplage, l'élément de retenue (5) avec sa zone de transition entre la première zone de surface (21) sensiblement cylindrique et la deuxième zone de surface (22) tronconique est disposé dans une zone de transition, réalisée sur l'élément de serrage (4) entre la première partie de surface (16) tronconique et le logement (38).

48. Pièce de raccordement (1) selon l'une quelconque des revendications précédentes, **caractérisée en ce que**, dans la première position de couplage, il se forme entre la saillie (33) de l'élément de retenue (5) et l'élément de serrage (4) au moins un logement (39) supplémentaire, qui s'étend dans la direction axiale.

49. Pièce de raccordement (1) selon l'une quelconque des revendications précédentes, **caractérisée en ce que**, dans la première position de couplage, le logement (38) orienté dans la direction axiale est formé entre une extrémité de l'élément de remplissage, orientée vers l'élément de retenue(5), et l'élément de serrage (4).

50. Pièce de raccordement (1) selon l'une quelconque des revendications précédentes, **caractérisée en ce que,** dans une deuxième position de couplage, l'élément de retenue (5) est décalé par rapport à la première position de couplage dans la direction axiale vers l'élément de serrage (4), et la saillie (33) de l'élément de retenue (5) prend appui dans la direction axiale contre l'élément de serrage (4).
